(19) Europäisches Patentamt
European Patent Office
Office européen des brevets

(11) Publication number: 0 037 418
B1

# (12) EUROPEAN PATENT SPECIFICATION

(45) Date of publication of patent specification: 03.07.85

(51) Int. Cl.[4]: E 21 B 21/12, E 21 B 33/13, E 21 B 33/138, C 08 K 3/34, C 08 K 5/01

(21) Application number: 80902145.4

(22) Date of filing: 24.09.80

(86) International application number: PCT/US80/01237

(87) International publication number: WO 81/00874 02.04.81 Gazette 81/08

## (54) SHEAR THICKENING FLUID.

(30) Priority: 27.09.79 US 79436

(43) Date of publication of application: 14.10.81 Bulletin 81/41

(45) Publication of the grant of the patent: 03.07.85 Bulletin 85/27

(84) Designated Contracting States: FR

(56) References cited:
GB-A- 471 637
GB-A-2 008 171
US-A-2 775 557
US-A-3 070 543
US-A-3 081 260
US-A-3 082 823
US-A-3 145 774
US-A-3 259 572
US-A-3 407 878
US-A-3 448 800
US-A-3 746 725
US-A-3 838 047
US-A-3 893 510
US-A-4 042 031
US-A-4 182 417

(73) Proprietor: Exxon Production Research Company
P.O. Box 2189 3120 Buffalo Speedway
Houston Texas 77001 (US)

(73) Proprietor: Exxon Research and Engineering Company
P.O.Box 390 180 Park Avenue
Florham Park New Jersey 07932 (US)

(72) Inventor: DRAKE, Evelyn N.
11 Brook Lane
Plainfield, NJ 07060 (US)
Inventor: MORRISON, Mary E.
3 Sleepy Oaks Lane
Houston, TX 77024 (US)
Inventor: DAWSON, Charles Rapier
2303 Dunstan
Houston, TX 77005 (US)

(74) Representative: Rinuy, Santarelli
14, avenue de la Grande Armée
F-75017 Paris (FR)

(56) References cited:
DERWENT ABSTRACT 59298, SOVIET UNION 629322, SEPTEMBER 6, 1978

DERWENT ABSTRACT 36479, DL124430, FEBRUARY 23, 1977

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 037 418 B1

**Description**

The instant invention is directed to shear thickening composites or compositions, which may be used for plugging flow channels in or near wellbores. The shear thickening compositions comprise a granular water swellable clay having a particle size in the range of 1.68 mm to .250 mm (10—60 mesh Tyler) capable of rapidly forming a high strength paste when mixed with a water, water-soluble-polymer solution, an oil-surfactant phase and a water-water soluble polymer phase wherein the granular water-swellable clay is suspended in the oil-surfactant phase as discrete particles and the water-water soluble polymer phase is also suspended in the oil-surfactant phase as discrete droplets, and wherein the water swellable clay and water-polymer phases are separated by an intact intervening oil-surfactant phase, the clay being present in sufficient quantity so as to form a paste having a shear strength of at least 907 kg/9.3 $m^2$ (2000 lb/100 $ft^2$ when the oil-surfactant phase is ruptured by application of sufficient shear.

The granular clay is suspended in the oil phase and the aqueous phase is also suspended as discrete droplets in the oil phase so that the oil phase is the continuous phase, the system being idenitified as a granular clay oil external system.

The granular clay and the aqueous phase are kept separate from each other by the intervening oil phase until such time as their interaction is desired. Such interaction is effected by rupturing the oil phase envelope by the application of a shear force sufficient to rip apart the oil phase envelope and thereby mix the clay and aqueous components resulting in the formation of a paste having a strength of at least 907 kg/9.3 $m^2$ (2000 lbs/100 $ft^2$).

Such a sufficient shear force can be encountered by the fluid composite upon passage through the orifices of a drill bit or nozzle or by the application of a sufficiently high pumping velocity during ordinary pipe flow.

In drilling operations, this fluid is pumped down the drill pipe only when necessary for the specific purpose of controlling a blowout or sealing off a zone of lost circulation or blocking some other unwanted flow path. This material is not to be confused with typical well circulation-drilling fluids containing clay and water-polymer components.

The material of the instant invention is stable to the forces exerted upon it during pumping down the well pipe. However, passing through the nozzles of the drill bit at a high differential pressure applies a sufficient force to rupture the oil envelope and mix the clay and water-polymer components into a semi-rigid, high-strength paste capable of plugging the wellbore or sealing a circulation thief zone or other unwanted flow channel.

The stiff paste formed by this invention will have a shear strength in the range from 907 to 13,600 kg/9.3 $m^2$ (2000 to 30,000 lb/$ft^2$). The ability of this paste to resist flow in some particular flow channel will depend on well-known physical principles. In channels with circular cross-section, the pressure required to move a plug will be

$$P = 40 \frac{\tau L}{D}$$

where P is the differential pressure across the plug, in Pa
$\tau$ is the shear strength of the paste in kg/$m^2$.
L is the length of the plug, in meters.
D is the diameter of the channel, in meters.

The instant stiff paste can also stop pre-existing unwanted flows provided that the paste is injected into the unwanted flow at an appropriately high rate and provided that the unwanted flow is existing through a flow channel long enough for a paste plug to be formed.

The exact placement of a paste plug in or near a wellbore will depend on the problem to be treated. For example, if unwanted fluid was entering the wellbore at the bottom and flowing uphole, the past plug would be formed as close to the bottom of the hole as possible. On the other hand, if fluid was flowing downhole from and departing the wellbore undesirably into a thief formation, the composite would be pumped into the wellbore just above the thief zone so that the past would be formed at the flow channels in that zone and plug them. Other possible uses of the present invention can also be envisioned, such as blocking channels in cement behind casing, repairing leaks in casing or tubing, placing temporary plug in various places, etc.

Background of the Invention

During drilling or production of an oil or gas well, there are occasionally unwanted fluid flows in or near the wellbore, and there are also occasionally unwanted channels open downhole where unwanted flow could take place. On these occasions, it may be necessary to introduce fluids into the well to kill the well, or at the very least, terminate the unwanted flow or seal the unwanted channels. Examples of these problems are:

unwanted influx of formation fluid into the well bore (blowout),

loss of drilling fluid into the fractures or vugs in the formation (lost circulation),

channels in cement behind casing,
holes in casing,
improperly sealing linear hangers.

A typical scenerio involves formation fluid influx into the wellbore which cannot be contained by closing the blowout preventors or by circulating the high density drilling mud. For example, when an unusually high pressure formation is encountered, it may be necessary to employ drilling mud a such a high weight that a formation above the high pressure zone is fractured. This fractured zone then becomes a "lost zone" (thief zone) into which mud flows at such a high rate that circulation is lost. The lost circulation may be so severe that it ultimately becomes impossible to maintain a column of mud above the high pressure zone sufficient to impart the necessary hydrostatic head to offset the high pressures in the high pressure zone. As this occurs, the well becomes increasingly susceptible to blowout into the lost zone or to the surface.

There are a number of techniques which are employed when one or another of these problems are encountered. A common solution is to force a cement slurry into the unwanted flow channel. This procedure is often successful, although sometimes multiple treatments are necessary, as long as there is no significant flow present in the unwanted channel. Cement is useless against a pre-established flow because cement has almost no flow resistance until it is set. Thus it is always necessary to stop the flow before using cement to plug the flow channel.

The hydrostatic head of various fluids is often employed to prevent or stop unwanted movement of fluids up the wellbore. In particular, most blowouts involve the uncontrolled flow of formation fluids into the wellbore and then upwards in the wellbore. This type of blowout can be controlled by injecting fluid at the proper density and rate into the wellbore at or near the point of influx. In practice the required density and rate may be difficult to obtain.

On technique involves placing a high density barite (barium sulfate) slurry in the annulus just above the high pressure zone to provide the extra hydrostatic head needed to stop or prevent formulation fluid influx. If the barite slurry remains deflocculated after placement at the bottom of the well and relatively undisturbed, the barite settles uniformly to form a hard plug. One problem with using barite to form a plug, however, is that barite's ability to form a plug varies greatly depending upon the formation temperature, the operating conditions, and the quality of barite used. For example, it is sometimes difficult to plug a well in the presence of a significant flow movement in the wellbore. If the fluid influx is not killed immediately by the hydrostatic head of the barite slurry, the settling barite will usually not stop the unwanted flow.

The unwanted loss of fluids from the wellbore is often treated by injecting a slurry of fiberous, lumpy, or flakey material into the wellbore at the region of the loss. These "lost circulation materials" are intended to plug or bridge over, i.e., form a mat over, the channels through which the fluid is entering the rock.

A pasty material known as "gunk" is sometimes used as a lost circulation material and occasionally to form temporary plugs in the wellbore. Gunk is a slurry of dry powdered bentonite in diesel oil. A typical gunk recipe is 159 kg (350 lb) of bentonite in of bbl of diesel oil. This slurry is quite fluid when mixed and remains fluid as long as it is kept dry. Mixing gunk slurry with an approximately equal volume of water causes the clay to hydrate giving a stiff paste. If formed at the right time and at the right place, this gunk paste is an effective lost circulation and plugging material. However, since the gunk slurry will hydrate and thicken immediately upon contacting water, it must be kept dry until it has been pumped downhole to the place where a plug is desired. The mixing of the gunk slurry with water takes place downhole as the two fluids are commingled. In some cases, there is some control over the ratio of gunk slurry to water, in other cases, this control cannot be achieved. Since gunk only achieves adequate flow resistance to form a plug within a certain range of gunk/water ratios, the performance of gunk as a plugging agent has been erratic. In particular, gunk is seldom useful for blowout control because the requirement of having the proper gunk/water ratio is difficult to satisfy.

Disclosure

The composites of the instant invention solve a multitude of well-control problems, in particular the problems of thief zone control and blowout control and prevention. A low viscosity material, stable to pumping, is pumped down a well pipe and forced through the orifices of the drill bit nozzle or other means of effectuating a pressure drop at a point where it is desired to plug the well-bore or thief zone. Upon being subjected to shear forces of sufficient intensity to rupture the oil membrane separating the clay and the water-polymer phases, the material sets up into an extremely high viscosity, semi-rigid, high-strength paste which itself can have a shear strength in excess of 907 kg (2,000 pounds) per 9.3 $m^2$ (100 square feet).

The shear thickening fluids of the instant invention are a multicomponent composite, comprising a water swellable granular material (for the purposes of this specification, the term "clay" shall be employed) which can broadly be described as any clay which, in the presence of water or of certain water-polymer materials employed here swells into a high viscosity solid mass; a hydrophobic phase comprising a hydrocarbon component and a surfactant component; and an aqueous phase component made up of water and a water soluble polymer. Enough water swellable granular material is employed to result in the formation of a paste possessing a strength of at least 907 kg/9.3 $m^2$ (2000 lbs/100 $ft.^2$).

Preferred clays useful in the instant invention would include any members of the montmorrillonite (smectite) group or the attapulgite group. Clays which swell strongly and absorb large quantities of water will perform better in this invention than those which do not. Clays which have been chemically treated, as

with soda ash or sodium polyacrylate, to increase their ability to absorb water and form a stiff paste will show improved performance in the instant invention.

In general, the hydrocarbon phase comprises a liquid oil, preferably any low aromatic content oil, typically mineral oil, paraffinic oils of from 6 to 1000 carbons (provided they are liquid at the temperature at which they are employed that is, during composite preparation and utilization) motor oils such as diesel fuel or kerosene, substituted paraffinic oils wherein the substituents are selected from the group consisting of halogen atoms and amino, sulfate, nitrate, carboxyl and hydroxyl groups, etc. Preferred oils are the $C_6$—$C_{200}$ liquid paraffins.

These hydrophobic nonaqueous materials are preferably mixed with oil soluble surfactants so as to enhance their surface activity. A wide variety of surfactants can be used in the instant invention. These surfactants include anionic, cationic, nonionic and ampholytic surfactants. These surfactants are described in the book *Surface Active Agents and Detergents* by Schwartz, Perry and Beich, Interscience Publishers, Inc., New York, New York.

The only requirement which must be met by the surfactant is that it be able to stabilize the aqueous phase droplets and clay particles in the oil phase sufficiently to protect the mixture from premature gelling under low shear mixing or pumping conditions.

Anionic surfactants include carboxylic acids, i.e., fatty acids, resin acids, tall oil acids and acids from paraffin oxidation products. Also included among the anionic surfactants are alkyl sulfonates, alkylaryl sulfonates, mohogany and petroleum sulfonates, phosphates and lignin derivatives.

Cationic surfactants include quaternary ammonium compounds, e.g., salts of long chain primary, secondary and tertiary amines as well as quaternary amine salts with 7 to 40 carbon atoms. Styrene copolymers containing pendant quaternary ammonium groups including derivatives of trimethylamine or dimethylethanolamine are also useful cationic surfactants.

Unprotonated amines fall into the class of non-ionic surfactants. A preferred group of amines have the general formula:

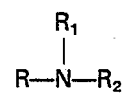

wherein R, $R_1$, and $R_2$ may be independently selected from the group consisting of hydrogen, $C_1$ to $C_{20}$ alkyl, $C_6$ to $C_{20}$ aryl and $C_7$ to $C_{20}$ alkylaryl radicals.

Various polyamine derivatives are useful within the scope of the instant invention. The preferred polyamine derivatives are those having the general formula:

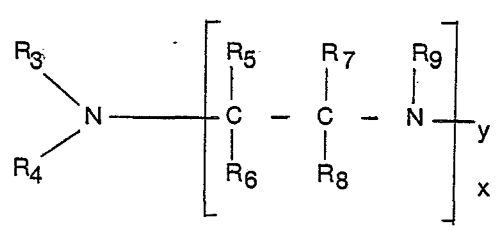

wherein $R_3$, $R_4$, $R_5$, $R_6$, $R_7$, $R_8$, $R_9$ and y are chosen from the group consisting of hydrogen, $C_1$ to $C_{20}$ alkyl, $C_6$ to $C_{20}$ aryl, $C_7$ to $C_{20}$ alkaryl radicals and substituted derivatives thereof, and x is an integer of from 1 to 100. The substituted derivatives are preferably selected from the group consisting of oxygen, nitrogen, sulfur, phosphorus and halogen containing derivative. The most preferred material is

$$H_2N(CH_2CH_2NH)_3—CH_2CH_2NH_2$$

In general, the preferred surfactants are the products obtained by the reaction of the polyamine described above with various polyalkylene succinic anhydrides, such as polyisobutylene succinic anhydride, polypropylene succinic anhydride and polybutylene succinic anhydride.

A preferred polyamine derivative formed by reacting together an alkyl succinic radical and the polyamine has the general formula:

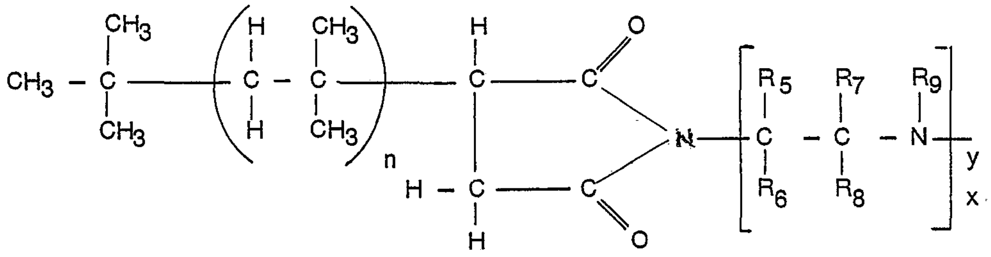

(A)

wherein n varies from 10 to 60, preferably 10 to 30, most preferably 15—17; x varies from 1 to 100, preferably 3 to 10; $R_5$, $R_6$, $R_7$, $R_8$, $R_9$ are hydrogen $C_1$ to $C_{20}$ alkyl, $C_6$ to $C_{20}$ aryl, $C_7$ to $C_{20}$ alkaryl radical and substituted derivative thereof, preferably hydrogen; and y is selected from the group consisting of hydrogen and oxygen containing hydrocarbyl radicals having up to 10 carbons, e.g., acetyl. Typically, the surfactants have a molecular weight on the order of about 1000. As previously stated, a most preferred characteristic of the surfactants is oil solubility.

Nonionic systems also include the polyethenoxy surfactants, i.e., polyethoxy ethers of alkyl phenols, polyethoxy ethers of alcohols, etc. The polyethenoxy ethers are especially useful in the invention as their solubility may be varied according to the weight of ethylene oxide added to the alkyl phenol starting material. Another nonionic surfactant which is particularly useful is sorbitan monooleate which is known in the trade by the name of Span-80* and manufactured by the Atlas Chemical Company. Ampholytic surfactants contain both an acidic and a basic function in their structure and therefore will be cationic or anionic according to the pH of the solution in which they are dissolved.

The final component of the shear sensitive well control fluids of the instant invention is an aqueous phase comprising water and a water soluble and/or a water swellable polymer. Typical polymers include polyacrylamides including homopolymers, acrylamide lightly cross-linked by between about 500 and 5000 parts per million by weight of the monomers present with such agents as methylene-bisacrylamide or divinyl benzene, and a major portion of acrylamide copolymerized with a minor portion of other ethylinically unsaturated monomers copolymerizable therewith; or polystyrene sulfonate and polyvinyltoluene sulfonate and water soluble salts thereof; or polyethyleneoxide and polyvinyl alcohol. The preferred water-swellable polymer is polyacrylamide. These water soluble-water swellable polymers are hydrolyzed to a degree ranging from 0—50%, preferably 0—15%, most preferably 1—7% or less.

The polyacrylamides and relates polymers which can be used in the practice of the present invention include polymers selected from the group consisting of polyacrylamides and polymethacrylamides wherein up to about 75 percent of the carboxamide groups can be hydrolyzed to carboxyl groups; polyacrylic acid and polymethacrylic acid; polyacrylates; polymers of N-substituted acrylamides wherein the nitrogen atoms in the carboxamide groups can have from 1 to 2 alkyl substituents which contain from 1 to 4 carbon atoms, copolymers of acrylamide with another ethlenically unsaturated monomer copolymerizable therewith, sufficient acrylamide being present in the monomer mixture to impart said water-dispersible properties to the resulting copolymer when it is mixed with water, and wherein up to about 50 percent of the carboxamide groups can be hydrolyzed to carboxyl groups; and admixtures of such polymers. Presently preferred polyacrylamide type polymers include the various substantially linear homopolymers and copolymers of acrylamide and methacrylamide. By substantially linear it is meant that the polymers are substantially free of cross-linking between the polymer chains.

All the polymers useful in the practice of the invention are characterized by having high molecular weight. The molecular weight is not critical so long as the polymer is water swellable and/or water soluble; however, it is preferred that the weight range between about 2—8 million, preferably 1 million. It is preferred that the polymer have a molecular weight of at least 100,000. The upper limit of molecular weight is unimportant so long as the polymer is at least water soluble or water swellable or higher, and meeting said conditions, can be used.

The granular clay will be suspended in the oil phase while discrete droplets of the water-polymer phase will also be suspended in the oil phase (the discrete granular clay particles and encapsulated water-polymer droplets existing as separate entities, separated by the suspending oil phase) which oil phase in this embodiment is thus the continous phase.

The granular clay and the water polymer are kept separate by the oil continuous phase until such time as their mixing is deliberately desired, and this is accomplished by subjecting the composite to a shear force as, for example, by passage through the nozzle of a drill bit, of sufficient intensity to rupture the oil-phase envelope.

It has been discovered that the use of granular clay will result in an oil continuous system. Clay is termed granular if it has a mean particle size of approximately in the range of 1.68 mm to 250 microns (10—60 mesh Tyler), more preferably from 1.68 mm to 354 microns (10—40 mesh), most preferably from 841 to 354 microns (20—40 mesh). The clay should preferably have removed from it fines of <149 microns

*Span is a registered trade-mark.

(>100 mesh). This results in a composite exhibiting greater low shear stability. The presence of excessive fine clay particles will cause premature thickening of the final composite:

Because of the resistance to hydration exhibited by granular clay, one can employ a greater loading of granular clay in the composite as compared to powdered clay. For those systems utilizing granular clay (particularly granular bentonite), the components may be present in the composite in the following ranges:

| | | Parts by Weight |
|---|---|---|
| Compositions possessing 5 min. low shear stability, 907 kg/9.3 $m^2$ (2000 lb/100 $ft.^2$) paste strength after high shear | Granular Clay | 100 |
| | Surfactant | 5.5—29 |
| | Hydrocarbon oil | 25—130 |
| | Polymer | .1—6.7 |
| | Water | 25—400 |

| | | Parts by Weight |
|---|---|---|
| Compositions possessing 5 min. low shear stability and 2,268 kg/9.3 $m^2$ (5000 lb/100 $ft^2$) paste strength after high shear | Granular Clay | 100 |
| | Surfactant | 5.5—25 |
| | Hydrocarbon Oil | 25—110 |
| | Polymer | .1—6.7 |
| | Water | 50—350 |

| | | Parts by Weight |
|---|---|---|
| Preferred composition possession 5 min. low shear stability and 4,536 kg/9.3 $m^2$ (10,000 lb/100 $ft^2$) paste strength after high shear | Granular Clay | 100 |
| | Surfactant | 5.5—20 |
| | Hydrocarbon Oil | 25—75 |
| | Polymer | .1—6.7 |
| | Water | 100—300 |

In the preferred embodiment, the clay is a granular bentonite clay, the polymer is polyacrylamide, the hydrocarbon oil is S100N, a $C_{30}$ paraffinic hydrocarbon, and the surfactant is chosen from the group of materials having formula corresponding to Compound A, previously defined.

Most preferably, polyamines of the formula $A_1$ or $A_2$ following are employed.

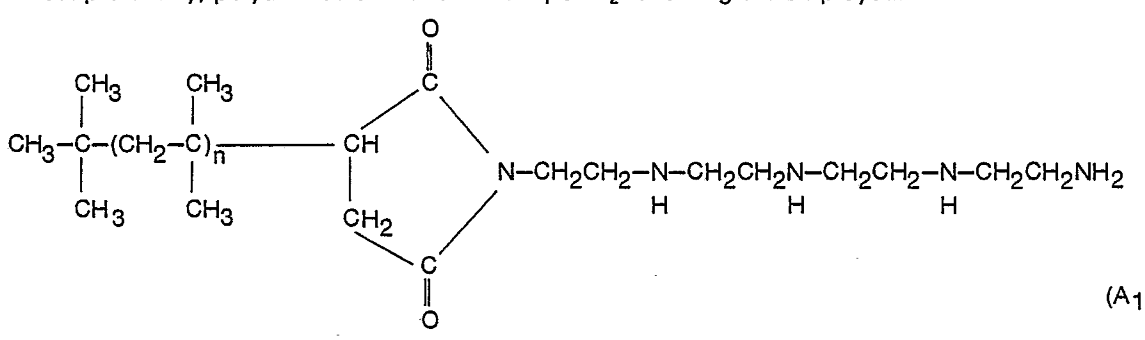

($A_1$)

Polyamine $A_1$ is available as Paranox*100 from Exxon Chemical Company.

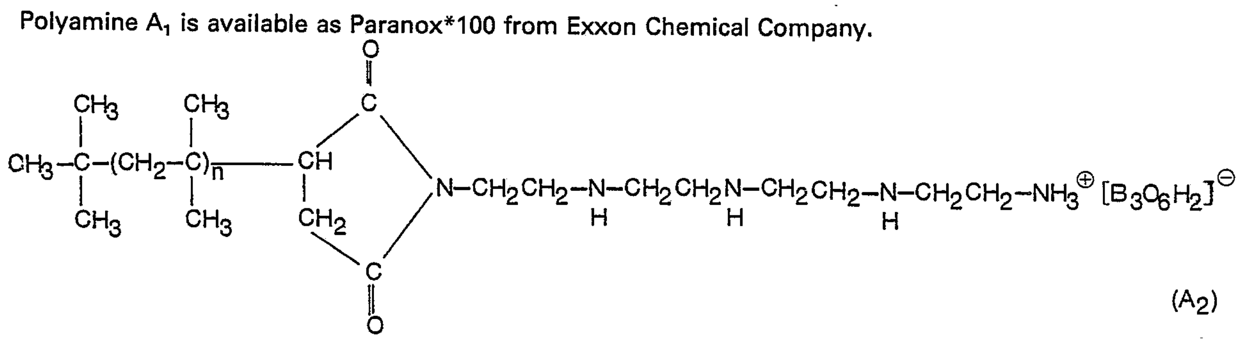

($A_2$)

Polyamine $A_2$ is available as Paranox*106 from Exxon Chemical Company.

*Paranox is a registered trade mark.

In addition, the composition may have included in it either in the oil phase or in the water-polymer phase, preferably the oil phase, a fiberous material such as fiber-glass, asbestos wood fiber, cellulose, shreaded paper, cotton seed hulls, sugar can bagasse, pencil shavings, peanut shells, etc., which is substantially impervious to the action of the water-polymer phase and to the oil phase. These added materials serve the purpose of imparting increased mechanical strength and rigidity to the paste which forms upon rupture of the oil envelope when the clay and water-polymer phases interact.

The shear thickening fluid may also have added to it materials such as barite, hemalite, galena, ilmenite, etc., which are commonly used for increasing the density of drilling fluids. These weighting agents are not water-swellable and will not participate in the shear-thickening effect of the instant invention but would be added if higher density formulations were particularly desired. If used, the weighting agents will absorb some of the surfactant, especially if the agent is finely powdered. Consequently, an additional volume of the surfactant would have to be added to make up for this absorbed portion, so as to maintain the stability of the composition.

For the purposes of the specification, a paste is defined as being capable of sealing a lost circulation zone or a blowout if it develops a shear strength of at least 907 kg/9.3 $m^2$ (2000 pounds per 100 square feet).

The mixtures of the instant invention have been found to function quite well at temperatures of 149°C (300°F) or higher as would be actually encountered in well control situations.

With the proviso that the clay and the aqueous phase are never mixed together before their introduction into the oil phase, the components of the instant invention may be mixed in any order. In general, the oil-surfactant and clay are mixed together employing any convenient mixing apparatus. Alternatively, the oil-surfactant phase may have the aqueous polymer phase suspended in it first. This emulsion can be kept "on hand" in its premixed form. To this then is added the clay, when needed, to control a blowout or seal a thief zone. Clearly, then it can be seen that the clay can be added to a premixed oil and surfactant or the clay can be added to the oil and then have the surfactant added, or vice-versa, or the oil, or surfactant or oil-surfactant can be added to the clay, this clay, oil-surfactant emulsion then being added to or having added to it the premixed water polymer system. The oil surfactant can have the premixed water-polymer added to it and then the clay added.

Preferably, the oil and surfactant are mixed together first and then the clay is added. These results in the formation of a granular clay in oil/surfactant emulsion. Next this encapsulated clay has added to it the water/polymer solution. The resulting material will be oil-surfactant phase continuous.

It has been determined that the use of the water soluble polymer, such as polyacrylamide serves two beneficial functions. First, it improves the stability of the initial shear-thickening mixture by reducing the tendency of the mixture to thicken prematurely. Second, it gives a higher strength paste after high shear mixing. It has been determined that the hydrolysis of the polyacrylamide has a direct effect on the behaviour of the material mixtures. Unhydrolyzed polyacrylamide results in a material which has a greater paste strength after high shear but has shorter low shear thickening time. Hydrolyzed polymer, on the other hand, gives the material a greater degree of stability but reduces the ultimate strength of the paste. Degree of hydrolysis may range, therefore, from 0% to 50%, preferably 0 to 15%, more preferably 1 to 7% or less. It has been determined that, within the above constraints, low shear thickening time (i.e., stability) is roughly independent of polymer concentration within the concentration ranges previously recited, while paste strength tends to increase with increased polymer concentrations.

In the practice of this invention, it is necessary to choose a specific formulation, from the ranges given above, that will perform well in the particular situation at hand. Examples of uncontrolled variables which will influence the selection of a formulation are:

1. The depth in a wellbore at which the treatment is to be applied.

2. The temperature downhole where the treatment will be applied.

3. The type of mixing and pumping equipment which will be used to prepare the material and inject it into the wellbore.

The type of unwanted flow or flow channel to be blocked.

Example 1 below contains a number of different specific formulations for shear-thickening fluid and shows the relationship between composition and performance.

Example 1

The following example illustrates the practice of the instant invention on a laboratory scale. The many different formulations tested in this example will clarify the relationship between composition and performance.

The components used in the formulations of this example are specifically identified as follows:

Oil— S-100N paraffinic oil available from Exxon Co., USA

Surfactant—Surfactant $A_2$ — available as Paranox* 106 surfactant available from Exxon Chemical Co., USA

Clay— KWK granular bentonite, available from American Colloid Co. particle size in the range of 841 to 210 microns (Mesh size *20—70)*

Polymer— P-250 polyacrylamide available from American Cyanamide Co. (Degree of Hydrolyses *1%)*

All samples of shear-thickening fluid in this example were prepared according to the following general procedure.

(1) A known weight of surfactant was dissolved in a known weight of oil.

(2) A known weight of granular bentonite was mixed with the oil/surfactant solution resulting in a slurry of clay in oil/surfactant.

(3) Polyacrylamide was dissolved in water to give a solution of the desired strength.

(4) The aqueous solution of polyacrylamide was added to the clay slurry with mixing resulting in the suspension of discrete droplets of polymer solution in the oil/surfactant to give an oil continous phase system.

In order to more accurately identify composites which will be useful under typical field conditions, a set of laboratory criteria was established to simulate the performance needed in the field. To this end, it was determined that for a composite to be useful, it must be pumpable, i.e., resistant to low shear forces for at least 5 minutes. It is also necessary that once mixed, sheared, and thickened the composite must have a shear strength of at least 907 kg per 9.3 $m^2$ (2000 pounds per 100 $ft.^2$).The limits used to describe the operable ranges of the various components used in the composite were chosen so as to result in a composite satisfying these criteria.

Shear strength of the fluid was measured by noting the distance a hollow, open-ended cylinder (88.9 mm long, 35.6 mm in diameter, and 0.25 mm wall thickness) would sink into the fluid under the force of various weight. Shear strength was then calculated from the following equation:

$$\text{Shear Strength in kg/m}^2 = \frac{\text{Total Weight in Grams} \times 4.4 \times 10^{-3}}{\text{Penetration Distance in meters}}$$

Standard formulations of granular bentonite L.M. well control fluid were prepared and mixed in a jacketed, low-shear mixing cell with an inside diameter of 73.7 mm and an inside height of 109.2 mm and a single egg beater impeller with an overall blade width of 45.8 mm and blade height of 68.6 mm. The jacket temperature of the cell was maintained at 95°C (203°F) with circulating hot water and the impeller was maintained at 500 RPM with a constant speed motor.The cell was tightly covered during mixing in order to prevent loss of water by evaporation from the fluid. The formulations were mixed for varying periods of time and then forced through a 6.35 mm nozzle with a differential pressure of 103 × $10^5$ Pa (1500 psi). Shear strengths of the fluid before and after passage through the high-shear nozzle were measured and plotted as a function of low-shearing mixing time. The effect of oil phase surfactant concentration on the results was determined by carrying out duplicate sets of experiments at high and low oil phase surfactant concentrations.

Plots of shear strength before and after high shear as a function of low-shear mixing time at high and low levels of oil phase surfactant concentration are given in Figures 1 and 2. In general, shear strength prior to high shear increases slowly with low-shear mixing until a point at which shear strength rises quite rapidly with additional low-shear mixing. This point is called the low-shear thickening time.

Following high shear, shear strengths of granular bentonite L.M. well control fluid jump to intermediate values after short periods of low shear mixing well before the low-shear thickening point. Oil phase surfactant concentration has a pronounced effect on this data. The lower level of surfactant, 21.7% Paranox 106 in S100N, gives higher shear strengths after shorter periods of low-shear mixing.

These experiments were chosen to resemble field conditions for use of L.M. well control fluid as closely as possible. The period of time during which the fluid can be mixed under low shear before the thickening point reflects the "low shear stability" of the fluid. The ability of the fluid to form a high-strength paste following one pass through the high shear nozzle after various time periods of low shear mixing reflects the "high shear sensitivity" of the fluid. The optimum well control fluid formulation will possess both maximum low shear stability and maximum high shear sensitivity simultaneously. On this basis the lower oil phase surfactant concentration used in these experiments is the preferred concentration because it yields substantially greater high shear sensitivity with little reduction low shear stability.

The low-shear thickening time of granular bentonite L.M. well control fluid was relatively insensitive to $H_2O$/Clay weight ratio while the paste strength after high shear exhibited a pronounced optimum in the range of 1—3 $H_2O$/Clay (Figure 3). See also Table I. In contrast to this, low-shear thickening time increased linearly with (Oil + Surfactant)/Clay weight ratio, and paste strength after high shear decreased at nearly the same rate (Figures 4, 5, and 6). See also Tables, II, III and IV. Aqueous phase weight percent of P-250 had relatively little effect on the low-shear thickening time of granular bentonite well control fluid as long as it was higher than a minimum value of about 0.5% (Figure 7). See also Table V. Paste strength of granular bentonite L.M. well control fluid after high shear increased linearly with aqueous phase weight percent P-250. Table VI presents a compilation of the data presented in the foregoing figures and tables.

Example 2

The following example illustrates the practice of the instant invention to create a plug in an actual wellbore. In this example the wellbore is plugged in the absence of any pre-existing fluid flow.

The wellbore used in this example had been drilled with a 200 mm (7 7/8") diameter rock bit to a total

depth of 792 m (2600 ft). The formations drilled were interbedded sands and shales; there were no significant drilling problems. The well had 219 mm (8 5/8″) surface casing set at 524 m (1718 ft). The wellbore was filled with 10.5 ppg water-base drilling mud.

The shear-thickening fluid used in this example contained:

428 kg (945 lb) S-100N Oil (Exxon USA)

47.6 kg (105 lb) Paranox*106 (Surfactant $A_2$ Exxon Chemical Co)

816 kg (1800 lb) KWK Granular Bentonite (American Colloid Co)

13,6 kg (30 lb) P-250 Polyacrylamide (Americal Cyanomide)

3.9 kg (8.6 lb) Fresh Water

These ingredients were mixed in a Halliburton ribbon blender which had two 50 bbl compartments. The mixing steps were:

(1) Dissolve the polyacrylamide in the water in one compartment of the blender.

(2) Mix the oil and surfactant in the other compartment.

(3) Add the clay to the oil/surfactant and continue mixing.

(4) Transfer the polymer solution into the compartment with the clay slurry and mix gently to form the shear-thickening emulsion.

The drill string used in this example 73 mm (2 7/8″) EUE tubing with a 200 mm (7 7/8″) rock bit on bottom. The bit was placed at 783 mm (2568 ft). The bit contained three 7.14 mm (9/32″) nozzles.

The shear-thickening material was pumped into the well with a Halliburton cementing truck. Steps in the pumping operation were:

(1) Rig up and circulate well with Halliburton

(2) Pump 318 l (2 bbl) water spacer

(3) Pump 1750 l (11 bbl) shear-thickening fluid at 159 l (one bbl)/min.

(4) Pump 318 l (2 bbl) water spacer

(5) Pump 2067 l (13 bbl) mud at 954 l (6 bbl)/min.

(6) Stop pumps

At this point the last of the shear-thickening material had just exited the bottom of the drill string through the bit. Passage through the bit nozzles had thickened the material into a stiff paste which had been forced up around the bottom of the drill string. Based on the volume pumped, 61 m (200 ft.) of annulus was filled with paste. The pump pressure during displacement of the shear-thickening material (step 6, above) started at 138 × $10^5$Pa (2000 psi) and reached 199 × $10^5$Pa (2900 psi) even though the rate was reduced to 795 l (5 bbl)/min. at the end of the displacement.

The fact that a plug had been placed in the annulus was shown by measuring the drag on the pipe and by trying to move the plug by pumping under it at a low rate. The pipe drag was 13,600 kg (30,000 lbs). The plug could not be moved by pumping down the drill string, at 62 × $10^5$Pa (900 psi) surface pressure the formation broke down.

## Example 3

The following example illustrates the practice of the instant invention to stop a pre-existing gas flow. This test was not performed in an actual well but rather in a simulated wellbore.

The simulated wellbore in this example consisted of 52.4 m (172 ft,) of 101.6 mm (4″) ID pipe. This pipe was open at one end and had multiple connections at the other end for introduction of gas and shear-thickening paste and for measuring the simulated bottom-hole pressure. The gas used in this example was air. This air was supplied from a 7.24 × $10^5$ Pa manometric (105 psig) reservoir and passed through a flow meter and a throttling valve before entering the 101.6 mm (4″) pipe.

The shear-thickening material used in this example was prepared with the same formulation used in Example 2 above. The mixing steps were similar except that a truck-mounted concrete mixer was used instead of a Halliburton ribbon blender to prepare the final emulsion. About 3785 liters(1000 gal.) of shear-thickening emulsion were prepared. This emulsion was pumped into the 101.6 mm (4″) pipe by a highpressure constant-rate pump. Before entering the 101.6 mm (4″) pipe, the emulsion was sheared through a valve which was adjusted to have a 83 × $10^5$ − 103 × $10^5$ Pa (1200—1500 psi) pressure drop at the flow rate being used.

In this example, the air throttling valve was first opened and adjusted to give an air flow rate of 5.6 MSCm/d (197 Mscf/d). After this flow was established in the 101.6 mm (4″) pipe, the shear-thickening-emulsion pump was started and the shear valve adjusted to give 83 × $10^5$ − 103 × $10^5$ Pa (1200—1500 psi) pressure drop at the valve. The emulsion pump rate was 378.5 liters per minute (100 gpm). In less than a minute, the shear-thickened paste had plugged the 101.6 mm (4″) pipe and stopped the air flow. The pressure in the injection end of the 101.6 mm (4″) pipe reached several millions Pa (hundred psi). The air flow did not resume even though the injection of paste was stopped. Subsequent testing showed that the paste plug in the 101.6 mm (4″) pipe would withstand pressure gradients of 2,3 × $10^5$ Pa/m (10 psi/ft.) without moving.

TABLE I

LOW SHEAR THICKENING TIMES AND PASTE STRENGTHS AFTER HIGH SHEAR FOR GRANULAR BENTONITE L.M. SHEAR THICKENING FLUID AS A FUNCTION OF $H_2O$/CLAY WEIGHT RATIO*

| | Surfactant | Oil | Clay | Polymer | Water | | | |
|---|---|---|---|---|---|---|---|---|
| Sample # | Paranox** 106 Grams | S100N Grams | Granular Bentonite Grams | Cyanamer P–250 Grams | Distilled $H_2O$ Grams | Water/Clay Weight Ratio | Low Shear Thickening Time Minutes | Paste Strength after High Shear $kg/m^2$ |
| 273 | 16.3 | 58.7 | 150 | 2.5 | 60 | 0.40 | 10 | 369 |
| 262 | 8.1 | 29.4 | 75 | 1.25 | 41 | 0.55 | 11.3 | 139 |
| 265 | 12.5 | 45.0 | 115 | 1.95 | 63 | 0.55 | 12 | 149 |
| 405 | 8.1 | 29.4 | 75 | 1.25 | 56 | 0.75 | 11.5 | 369 |
| 230 | 8.1 | 29.4 | 75 | 1.25 | 92 | 1.20 | 15.5 | 965 |
| 402 | 8.1 | 29.4 | 75 | 1.25 | 94 | 1.25 | 14.2 | 658 |
| 186 | 8.1 | 29.4 | 75 | 1.25 | 124 | 1.65 | 15.8 | 696 |
| 219 | 8.1 | 29.4 | 75 | 1.25 | 124 | 1.65 | 15.0 | 912 |
| 285 | 8.1 | 29.4 | 75 | 1.25 | 124 | 1.65 | 15.2 | 792 |
| 404 | 8.1 | 29.4 | 75 | 1.25 | 135 | 1.80 | 13.9 | 898 |
| 223 | 8.1 | 29.4 | 75 | 1.25 | 186 | 2.5 | 14.5 | 907 |
| 403 | 8.1 | 29.4 | 75 | 1.25 | 187 | 2.5 | 12.2 | 730 |
| 267 | 8.1 | 29.4 | 75 | 1.25 | 224 | 3.0 | 10.8 | 470 |
| 260 | 8.1 | 29.4 | 75 | 1.25 | 262 | 3.5 | 8.2 | 245 |
| 261 | 8.1 | 29.4 | 75 | 1.25 | 337 | 4.5 | 1.4 | 115 |

*Fixed surfactant/clay (0.11), oil/clay (0.39), and polymer/clay (0.0167) weight ratios; data plotted in Figure 3.

**Paranox is a registered trade-mark.

TABLE II

LOW SHEAR THICKENING TIMES AND PASTE STRENGTHS AFTER HIGH SHEAR FOR GRANULAR BENTONITE L.M. SHEAR THICKENING FLUID AS A FUNCTION OF (OIL + SURF)/CLAY WEIGHT RATIO*

| | Surfactant | Oil | Clay | Polymer | Water | | | |
|---|---|---|---|---|---|---|---|---|
| Sample # | Paranox** 106 Grams | S100N Grams | Granular Bentonite Grams | Cyanamer P–250 Grams | Distilled Grams | "Oil + Surf"/ Clay Weight Ratio | Low Shear Thickening Time Minutes | Paste Strength after High Shear $kg/m^2$ |
| 446 | 3.75 | 33.8 | 75 | 1.25 | 124 | 0.50 | 3.1 | 850 |
| 447 | 4.35 | 39.4 | 75 | 1.25 | 124 | 0.58 | 5.2 | 850 |
| 448 | 5.03 | 45.2 | 75 | 1.25 | 124 | 0.67 | 9.3 | 754 |
| 449 | 5.48 | 49.3 | 75 | 1.25 | 124 | 0.73 | 9.3 | 706 |
| 450 | 6.00 | 54.0 | 75 | 1.25 | 124 | 0.80 | 12.2 | 571 |
| 451 | 6.98 | 62.8 | 75 | 1.25 | 124 | 0.93 | 16.7 | 437 |
| 452 | 7.58 | 68.2 | 75 | 1.25 | 124 | 1.01 | 18.7 | 259 |
| 453 | 9.00 | 81.0 | 75 | 1.25 | 124 | 1.20 | 24.0 | 216 |
| 454 | 11.98 | 103.3 | 75 | 1.25 | 124 | 1.53 | 33.3 | 53 |

*(Oil + Surf) = 10%. Paranox 106 in S100N; fixed $H_2O$/Clay (1.65) and polymer/clay (0.0167) weight ratios; Data plotted in Figure 4.

**Paranox is a registered trade-mark.

TABLE III

LOW SHEAR THICKENING TIMES AND PASTE STRENGTHS AFTER HIGH SHEAR OF GRANULAR BENTONITE L.M. SHEAR THICKENING FLUID AS A FUNCTION OF (OIL + SURF)/CLAY WEIGHT RATIO*

| | Surfactant | Oil | Clay | Polymer | Water | | | |
|---|---|---|---|---|---|---|---|---|
| Sample # | Paranox** 106 Grams | S100N Grams | Granular Bentonite Grams | Cyanamer P–250 Grams | Distilled Grams | "Oil + Surf"/ Clay Weight Ratio | Low Shear Thickening Time Minutes | Paste Strength after High Shear $kg/m^2$ |
| 272 | 4.9 | 12.6 | 75 | 1.25 | 124 | 0.30 | 1.1 | 638 |
| 406 | 6.5 | 23.5 | 75 | 1.25 | 124 | 0.40 | 6.5 | 965 |
| 186 | 8.1 | 29.4 | 75 | 1.25 | 124 | 0.50 | 15.8 | 696 |
| 219 | 8.1 | 29.4 | 75 | 1.25 | 124 | 0.50 | 15.0 | 912 |
| 285 | 8.1 | 29.4 | 75 | 1.25 | 124 | 0.50 | 15.2 | 792 |
| 254 | 9.5 | 34.3 | 75 | 1.25 | 124 | 0.58 | 16.7 | – |
| 407 | 9.8 | 35.2 | 75 | 1.25 | 124 | 0.60 | 22.0 | 936 |
| 270 | 11.4 | 41.1 | 75 | 1.25 | 124 | 0.70 | 26.5 | 346 |
| 271 | 14.6 | 52.9 | 75 | 1.25 | 124 | 0.90 | 40.0 | 250 |
| 90 | 19.5 | 70.5 | 75 | 1.25 | 124 | 1.20 | >97.5 | 106 |

*(Oil + Surf) = 21.7% Paranox 106 in S100N; fixed $H_2O$/Clay (1.65) and polymer/clay (0.0167) weight ratios; Data plotted in Figure 5.

**Paranox is a registered trade-mark.

TABLE IV

LOW SHEAR THICKENING TIMES AND PASTE STRENGTHS AFTER HIGH SHEAR OF GRANULAR BENTONITE L.M. SHEAR THICKENING FLUID AS A FUNCTION OF (OIL + SURF)/CLAY WEIGHT RATIO*

| | Surfactant | Oil | Clay | Polymer | Water | | | |
|---|---|---|---|---|---|---|---|---|
| Sample # | ECA–5025 Grams | S100N Grams | Granular Bentonite Grams | Cyanamen P–250 Grams | Fresh[1] Grams | "Oil + Surf"/ Clay Weight Ratio | Low Shear Thickening Time Minutes | Paste Strength after High Shear $kg/m^2$ |
| 346 | 9.4 | 21.9 | 75 | 1.25 | 124 | 0.42 | 10 | 581 |
| 344 | 13.1 | 30.6 | 75 | 1.25 | 124 | 0.58 | 20.9 | 619 |
| 345 | 15.8 | 36.7 | 75 | 1.25 | 124 | 0.70 | 33 | 461 |
| 408 | 20.3 | 47.2 | 75 | 1.25 | 124 (Distilled) | 0.90 | long | 125 |

*(Oil + Surf) = 30.0%. Paranox 106 in S100N; fixed $H_2O$ Clay (1.65) and polymer/clay (0.0167) weight ratios; data plotted in Figure 6.

[1]Untreated well water, also used in the large scale test of Example 2.

TABLE V

LOW SHEAR THICKENING TIMES AND PASTE STRENGTHS AFTER HIGH SHEAR OF GRANULAR BENTONITE L.M. SHEAR THICKENING FLUID AS A FUNCTION OF AQUEOUS PHASE WEIGHT % P-250*

| | Surfactant | Oil | Clay | Polymer | Water | | | |
|---|---|---|---|---|---|---|---|---|
| Sample # | Paranox** 106 Grams | S100N Grams | Granular Bentonite Grams | Cyanamer P-250 Grams | Distilled Grams | Aqueous Phase Weight % P-250 | Low Shear Thickening Time Minutes | Paste Strength after High Shear $kg/m^2$ |
| 276*** | 8.1 | 29.4 | 75 | 0 | 125 | 0 | 1 | 720 |
| 395 | 8.1 | 29.4 | 75 | 0.125 | 125 | 0.10 | 10.2 | 802 |
| 394 | 8.1 | 29.4 | 75 | 0.312 | 125 | 0.25 | 11.3 | 706 |
| 393 | 8.1 | 29.4 | 75 | 0.625 | 124 | 0.50 | 13 | 744 |
| 277 | 8.1 | 29.4 | 75 | 0.625 | 124 | 0.50 | 12.9 | 878 |
| 186 | 8.1 | 29.4 | 75 | 1.25 | 124 | 1.0 | 15.8 | 696 |
| 219 | 8.1 | 29.4 | 75 | 1.25 | 124 | 1.0 | 15.0 | 912 |
| 285 | 8.1 | 29.4 | 75 | 1.25 | 124 | 1.0 | 15.2 | 792 |
| 142 | 8.1 | 29.4 | 75 | 1.25 | 123 | 2.0 | 14.3 | 1,022 |
| 142 | 8.1 | 29.4 | 75 | 2.50 | 123 | 2.0 | 16.7 | 907 |
| 275 | 8.1 | 29.4 | 75 | 3.75 | 121 | 3.0 | 16.7 | 1,286 |
| 282 | 8.1 | 29.4 | 75 | 3.75 | 121 | 3.0 | 17.3 | — |
| 286 | 8.1 | 29.4 | 75 | 5.0 | 120 | 4.0 | 19.0 | 1,056 |

*Fixed $H_2O$/Clay (1.65), surfactant/clay (0.11), and oil/clay (0.39) weight ratios; data plotted in Figure 7.

**Paranox is a registered trade-mark.

***Sample 276 is a comparative example.

TABLE VI

COMPOSITIONS RANGES OF GRANULAR BENTONITE L.M. SHEAR THICKENING FLUID

| Source of Data | Figure 3 | Figure 4 | Figure 5 | Figure 6 | Figure 7 |
|---|---|---|---|---|---|
| Composition Expressed in Parts by Weight | | | | | |
| Granular Clay | 100 | 100 | 100 | 100 | 100 |
| Paranox** 106 | 10.9 | 5.5–14 | 8.0–26 | 10.5–28 | 10.8 |
| S100N | 38.5 | 45–130 | 29–94 | 25–67 | 39.2 |
| P–250 | 1.66 | 1.6 | 1.67 | 1.67 | 0.1–6.7 |
| $H_2O$ | 25–400 | 165 | 165 | 165 | 166.7–160 |

Overall Composition Ranges Based on Combined Date of Figures 3 through 7

| | Parts by Weight |
|---|---|
| Granular Clay | 100 |
| Paranox** 106 | 5.5–29 |
| S100N | 25–130 |
| | 0.1–6.7 |
| P–250 | 25–400 |
| $H_2O$ | |

**Paranox is a registered trade-mark.

TABLE VII

Comparison of granular bentonite to powdered bentonite in shear sensitive L.M. well control fluid[1]

| Total Bentonite | Powdered Bentonite 200 Mesh | | Granular Bentonite 20—40 Mesh | |
|---|---|---|---|---|
| grams | gel time[2] (min) | gel (kg/m$^2$) | gel time[2] (min) | gel strength[3] (kg/m$^2$) |
| 30 | 24 | 547 | 780 | 101 |
| 45 | 10 | 792 | 22 | 518 |
| 60 | 0 | — | 15 | 1,248 |

[1]Basic Formula: 30.5 g oil (32.5% Surfactant $A_2$ in S100N)
30—60 g Bentonite Clay
125 g 1% P-250 in Water
[2]Gel time measured in jacketed low shear mixing cell, 500 RPM, 91°C.
[3]Gel strength measured after hand kneading at room temperature.

This set of data show that it is possible to stabilize a greater weight of granular bentonite than powdered bentonite with a fixed amount of water, oil, surfactant, and polymer in L.M. well control fluid. At the highest clay loading, the granular bentonite fluid is able to withstand 15 minutes of low shear mixing at 500 RPM and 91°C, whereas the powdered bentonite fluid gels immediately. As a consequence of the higher clay loadings attainable with the granular bentonite fluid, it exhibits higher gel strengths than the powdered bentonite fluid.

Apart from higher gel strength, the initial phase continuity of granular bentonite well control fluid is unexpectedly different from that of powdered bentonite fluid. Following mixture of all the components in the standard manner, granular bentonite fluid is oil external whereas powdered bentonite fluid is water external.

The difference in phase continuity between the two fluids affects their response to changes in temperature and shear. Over the temperature range of 47° to 95°C, the gel time of powdered bentonite fluid decreases from 120 to 25 minutes, very nearly as the inverse square of the change in temperature. In contrast to this, the gel time of granular bentonite fluid over the same temperature range decreases as the inverse first power of the change in temperature. See Figure 8. The fluids compared in that figure have the following compositions:

| | |
|---|---|
| Powdered bentonite formulation: | 30.5 g Oil (32.5% Surf. $A_2$ in S100N)<br>30.5 g Powdered bentonite<br>125. g 1% P-250 in water |
| Granular bentonite formulation: | 37.5 g Oil (21.7% Surf. $A_2$ in S100N)<br>75. g KWK Volclay (841—354 microns bentonite)<br>125. g 1% P-250 in water |

Similarly, the gel time of powdered bentonite fluid decreases as the inverse square of mixer RPM, whereas the gel time of granular bentonite fluid varies as the inverse first power of mixer RPM. See Figure 9. The fluids compared in that figure have the following compositions:

| | |
|---|---|
| Powdered bentonite formulation: | 30.5 g Oil (32.5% Surf. $A_2$ in S100N)<br>30.5 g Powdered bentonite<br>125. g 1% P-250 in water |
| Granular bentonite formulation: | 43.7 g Oil (21.7% Surf. A in S100N)<br>75. g KWK Volclay (841—354 microns bentonite)<br>125. g 1% P-250 in water |

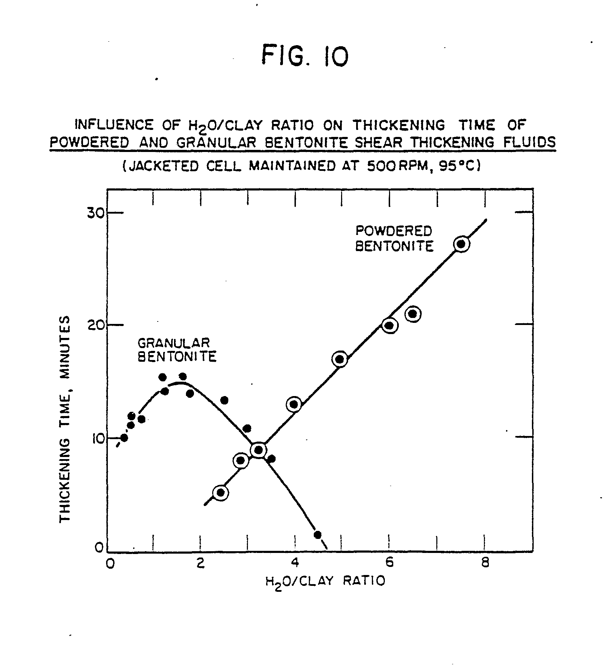

In addition to its effect on response to temperature and shear, the initial phase continuity of well control fluid affects the relationship between the composition and gel time. The most striking effect is seen in the relationship between $H_2O$/CLAY ratio and gel time, presented in Figure 10. The fluids compared in that figure have the following compositions:

| | |
|---|---|
| Powdered bentonite formulation: | 22.3 g Oil (32% Surf. $A_2$ in S100N)<br>30.5 g Powdered bentonite<br>1.0 g P-250<br>73.2—229. g Water |
| Granular bentonite formulation: | 37.5 g Oil (22% Surf. $A_2$ in S100N)<br>75. g KWK Volclay (841—354 microns) bentonite)<br>1.25 g P-250<br>30.—337. g Water |

The gelled granular bentonite fluid also retains a significantly higher fraction of its gel strength when mixed with additional water than does the powdered bentonite fluid.

TABLE VIII

Gel strength retention in the presence of additional water[1] powdered and granular bentonite well control fluids

| | Additional $H_2O$ Wt.% | Gel Strength $kg/m^2$ | Gel Strength Retained |
|---|---|---|---|
| Powdered Bentonite | 0 | 427 | 100% |
| | 20 | 192 | 45% |
| | 40 | 86 | 20% |
| | 100 | 2 | 6% |
| Granular Bentonite | 0 | 1,219 | 100% |
| | 20 | 1,008 | 80% |
| | 40 | 682 | 56% |
| | 100 | 230 | 22% |

[1]Fluids mixed to 80% of gel time in jacketed cell at 500 RPM and 95°C, passed through high shear piston cell, mixed with additional water, and kneaded by hand until maximum strength attained.

| | |
|---|---|
| Powdered bentonite formula: | 30.5 g Oil (32.5% Surf. $A_2$ in S100N)<br>30.5 g Powdered bentonite<br>125. g 1% P-250 in water |
| Granular bentonite formula: | 37.5 g Oil (21.7% Surf. $A_2$ in S100N)<br>75. g KWK Volclay (841—354 microns bentonite)<br>125. g 1% P-250 in water |

The influence of Clay Mesh range on the low shear gel time of granular bentonite liquid membrane well control fluid was determined. The well control fluids listed were formulayed in the standard manner previously recited employing the following components in the concentrations indicated:

125. g 1% P-250 in water
37.5 g oil (21.7% Surf. $A_2$ in S100N)

75. g KWK—Volclay ground and sieved to the mesh ranges indicated. The components were mixed in the jacketed sample cell at 500 RPM and 95°C and exhibited a strong dependence on clay mesh size, as presented in Table IX:

TABLE IX

| Particle size mm | Mesh Range | Low Shear Gel Time (Min.) |
|---|---|---|
| <0.149 | >100 mesh | 1.7 |
| 0.149/0.177 | 80/100 | 3.7 |
| 0.250/0.177 | 60/80 | 4.6 |
| 0.354/0.250 | 40/60 | 7.0 |
| 0.841/0.354 | 20/40 | 13.0 |
| >0.841 | <20 | 14.3 |

Liquid Membrane well control fluids containing granular bentonite, powdered bentonite and mixtures of granular and powdered bentonite were prepared and examined for low shear gel time/high shear gel strength. The results are presented in Table X.

TABLE X

| | % Granular Bentonite in Formula[3] | | | | |
|---|---|---|---|---|---|
| Total Grams Bentonite | 100% | 67% | 50% | 33% | 0% |
| 30 | 780/101* | — | 17/341 | — | 24/547 |
| 45 | 22/518 | 8/763 | — | 5/974 | 10/792 |
| 60 | 15/1,248 | — | 4/1,248 | — | — |

*Gel time[1], minutes/gel strength[2], kg/m²
[1]Gel time measured in jacketed low shear mixing cell, 500 rpm, 91°C
[2]Gel strength measured after hand kneading at room temperature
[3]Basic formula: 30.5 g oil (32.5% Surf. $A_2$ in S100N)
125 g 1% P-250 x g Bentonite Clay

As can be seen, systems employing mixtures of granular bentonite and powdered bentonite are inferior to systems employing either alone, with respect to either low shear gel times of high shear gel strength. Further, Table X shows that equivalent clay loadings (30 g) 100% granular yields an inoperable system while powdered functions quite well. Similarly, at a 60 g loading, 100% granular systems functions in a remarkably superior manner while powdered systems cannot even be formulated (the systems set up almost instantly, see also Table VII).

**Claims**

1. A shear thickening composition comprising a granular water swellable clay having a particle size in the range of 1.68 mm to .250 mm capable of rapidly forming a high strength paste when mixed with a water-water soluble polymer solution, an oil surfactant phase and a water/water-soluble-polymer phase wherein the granular water swellable clay is suspended in the oil-surfactant phase as discrete particles, and the water-water soluble polymer phase is also suspended in the oil-surfactant phase as discrete droplets and wherein the water swellable clay and water-polymer phases are separated by an intact invervening oil-surfactant phase, the clay being present in sufficient quantity so as to form a paste having a shear strength of at least 907 kg/9.3 m² (2000 lb/100 ft²) when the oil-surfactant phase is ruptured by application of sufficient shear.

2. The composition of claim 1 wherein the granular water soluble swellable clay having a particle size

in the range of 168 mm to .250 mm is selected from the group consisting of granular montmorillonite clay and granular attapulgite clay.

3. The composition of claim 1 wherein the oil comprises mineral oil, $C_6$ to $C_{1000}$ paraffinic oil, motor oil, substituted paraffinic oiil wherein the substituents are selected from the group consisting of halogen atoms and amino, sulfate, nitrate, carboxyl and hydroxyl groups.

4. The composition of claim 2 wherein the oil is a $C_6$ to $C_{200}$ liquid paraffin oil.

5. The composition of claim 1 wherein the water-soluble polymer is polyacrylamide, polymethacrylamide, polystyrene sulfonate, polyvinyl toluene sulfonate, polyethyleneoxide or polyvinyl alcohol.

6. The composition of claim 4 wherein the water-soluble polymer is polyacrylamide.

7. The composition of claim 6 wherein the polyacrylamide is hydrolyzed to a degree ranging from 0 to 50%.

8. The composition of claims 1, 2, 3, 4, 5, 6 or 7 comprising 100 parts by weight (pbw) granular clay, 25 to 400 pbw water, .1 to 6.7 pbw water soluble polymer, 25 to 130 pbw oil, and 5.5 to 29 pbw surfactant.

9. The composition of claim 8 wherein the surfactant is the product obtained by the reaction of the polyamine:

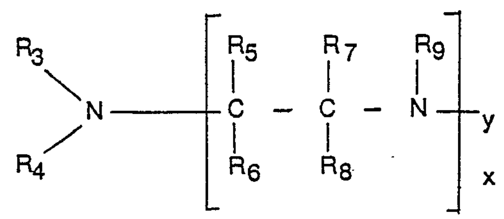

wherein $R_3$, $R_4$, $R_5$, $R_6$, $R_7$, $R_8$, $R_9$ and y are selected from the group consisting of hydrogen, $C_1$ to $C_{20}$ alkyl, $C_6$ to $C_{20}$ aryl, $C_7$ to $C_{20}$ alkaryl radicals and substituted derivatives thereof and x is an integer of from 1 to 100 with polyalkylene succinic anhydrides, reaction proceding at the $R_3$, $R_4$ substituted nitrogen.

10. The composition of claim 9 wherein the polyalkylene succinic anhydride is selected from the group consisting of polyisobutylene succinic anhydride, polypropylene succinic anhydride and polybutylene succinic anhydride.

11. The composition of claim 9 wherein the surfactant is represented by the general formula:

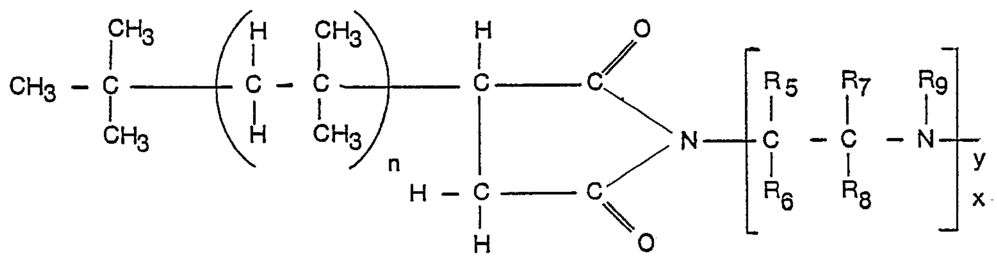

(A)

wherein n varies from 10 to 60, preferably 10 to 30, most preferably 15 to 17; x varies from 1 to 100, preferably 3 to 10; $R_5$, $R_6$, $R_7$, $R_8$, $R_9$ are hydrogen $C_1$ to $C_{20}$ alkyl, $C_6$ to $C_{20}$ aryl, $C_7$ to $C_{20}$ alkaryl radical and substituted derivative thereof, and y is selected from the group consisting of hydrogen and oxygen containing hydrocarbyl radicals having up to 10 carbons.

12. The composition of claim 11 wherein the surfactant is represented by the formula:

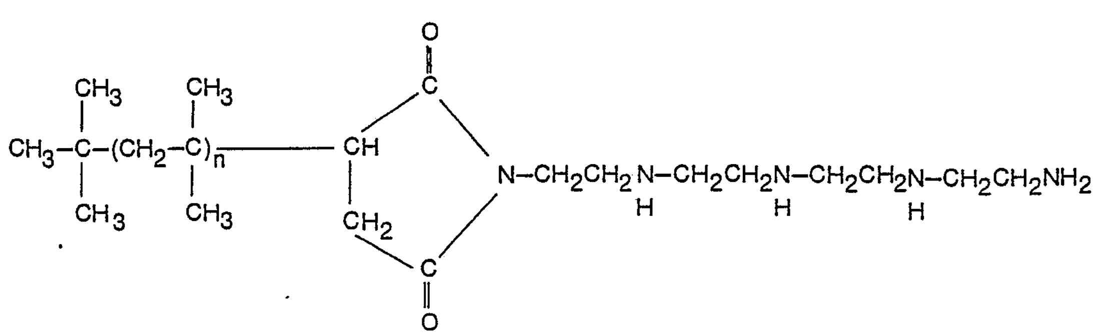

or

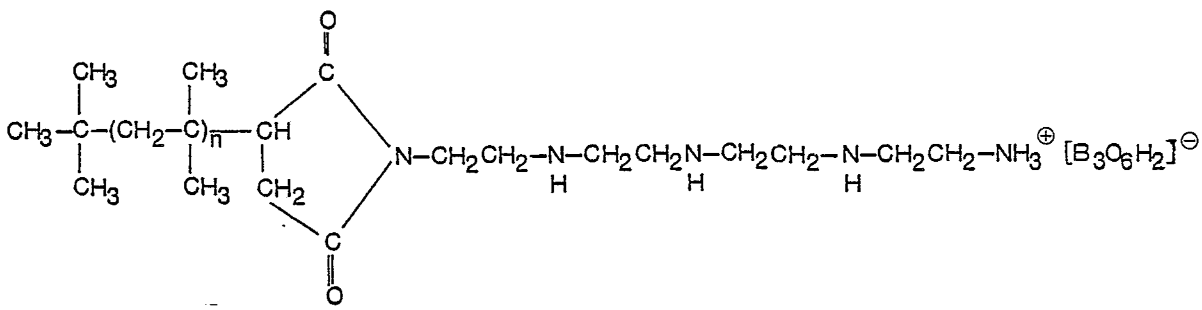

13. The composition of claim 8 wherein the granular clay has a grain particle size in the range of 1.68 mm to .354 mm.

14. The composition of claim 8 wherein the granular clay has a grain particle size in the range of .841 to .354 mm.

15. A method for treating a well penetrating a subterranean formation to block off unwanted flow paths comprising introducing into said well a shear thickening composition stable to pumping comprising granular water swellable clay having a particle size in the range of 1.68 mm to .250 mm capable of rapidly forming a high strength paste when mixed with a water/water-soluble-polymer solution, an oil-surfactant phase and a water/water-soluble-polymer phase wherein the granular water swellable clay is suspended in the oil-surfactant phaseas discrete particles, and the water/water-soluble-polymer phase is also suspended in the oil-surfactant phase as discrete droplets and wherein the water-swellable clay and water polymer phases are separated by an intact intervening oil-surfactant phase, the clay being present in sufficient quantity so as to form a paste having a shear strength of at least 907 kg/9.3 $m^2$ (2000 lb/100 $ft^2$) when the oil-surfactant phase is ruptured by application of sufficient shear.

16. The method of claim 15 wherein the high shear mixing consists of passing the shear thickening fluid through the orifices of a drill bit or nozzle in the well, thereby rupturing the oil-surfactant continuous phase.

17. The method of claim 15 wherein the shear thickening composition comprises 100 parts by weight (pbw) granular clay having a particle size in the range of 1.68 mm to .250 mm, 25 to 400 pbw water, .1 to 6.7 pbw water soluble polymer, 25 to 130 pbw oil and 5.5 to 29 pbw surfactant.

18. The method of claim 17 wherein the granular clay is montmorillonite clay or attapulgite clay, the oil is mineral oil, $C_6$ to $C_{1000}$ paraffinic oil, motor oil and substituted paraffinic oil wherein the substituents are selected from the group consisting of halogen atoms and amino, sulfate, nitrate, carboxyl and hydroxyl groups and the surfactant is the product obtained by the reaction of the polyamine

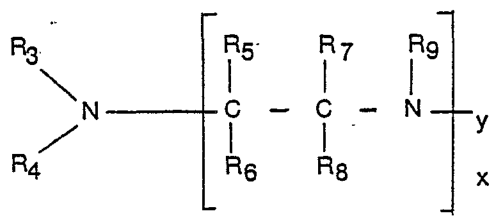

wherein $R_3$—$R_9$ and y are chosen from the group consisting of hydrogen $C_1$ to $C_{20}$ alkyl, $C_6$ to $C_{20}$ aryl, $C_7$ to $C_{20}$ alkaryl radicals and substituted derivatives thereof, and x is an integer of from 1 to 100 with polyalkylene succinic anhydrides, reaction proceding at the $R_3$, $R_4$ substituted nitrogen, and the water soluble polymer is polyacrylamide, polymethacrylamide, polystyrene sulfonate, polyvinyl toluene sulfonate, polyethylene oxide or polyvinyl alcohol.

19. The method of claim 18 wherein the water-soluble polymer is polyacrylamide.

20. The method of claims 17, 18 or 19 wherein the surfactant is represented by the general formula

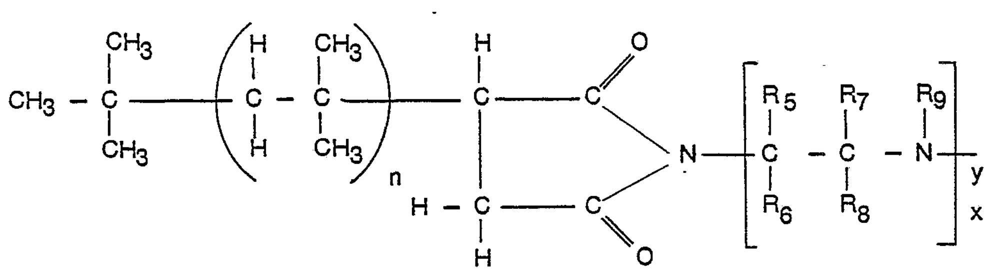

(A)

wherein n varies from 10 to 60, preferably 10 to 30, most preferably 15 to 17; x varies from 1 to 100, preferably 3 to 10; $R_5$, $R_6$, $R_7$, $R_8$, $R_9$ are hydrogen, $C_1$ to $C_{20}$ alkyl, $C_6$ to $C_{20}$ aryl, or $C_7$ to $C_{20}$ alkaryl radicals or substituted derivative thereof, and y is selected from the group consisting of hydrogen and oxygen-containing hydrocarbyl radicals having up to 10 carbons.

21. The method of claim 20 wherein the surfactant is of the formula:

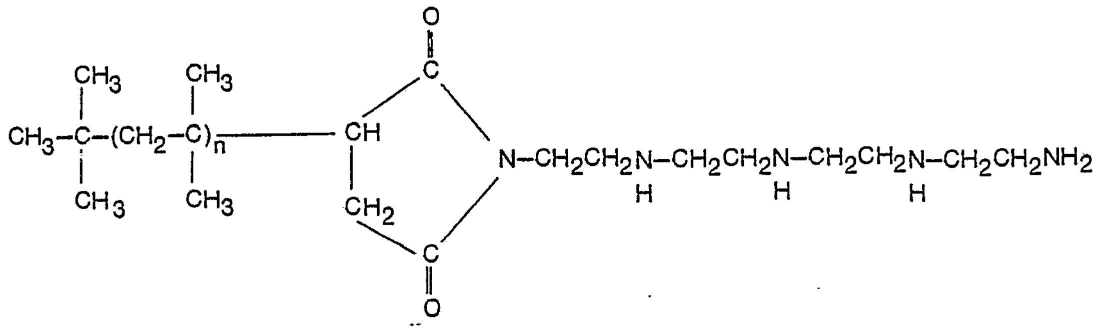

or

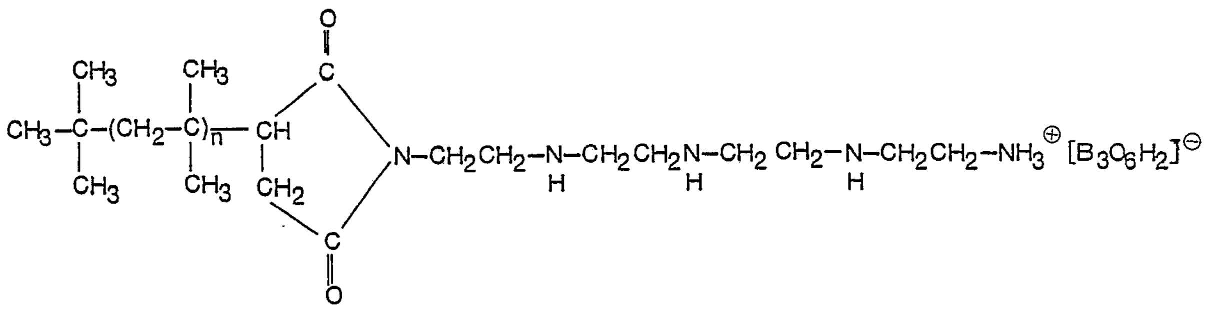

22. The method of claims 17, 18 or 19 wherein the granular clay has a grain size in the range of 1.68 mm to .354 mm.

23. The method of claim 20 wherein the granular clay has a grain size in the range of 1.68 mm to .354 mm.

24. The method of claim 21 wherein the granular clay has a grain size in the range of 1.68 mm to .354 mm.

25. The method of claims 17, 18 or 19 wherein the granular clay has a grain size in the range of .841 to .354 mm.

26. The method of claim 20 wherein the granular clay has a grain size in the range of .841 to .354 mm.

27. The method of claim 21 wherein the granular clay has a grain size in the range of .841 to .354 mm.

**Patentansprüche**

1. Durch Scherkraft verdickende Stoffzusammensetzung, welche ein durch Wasser quellbares körniges Tonmaterial mit einer Korngröße im Bereich von 1,68 mm bis 0,250 mm, das beim Mischen mit einer wässrigen Lösung eines wasserlöslichen Polymers rasch ein hochfestes Gel bildet, eine Ö-Netzmitel-Phase und eine Wasser-wasserlösliches Polymer-Phase enthält, worin das wasserquellbare körnige Tonmaterial in der Öl-Netzmmittel-Phase in Form getrennter Teilchen suspendiert ist und die Wasser-wasserlösliches Polmer-Phase in der Öl-Netzmittel-Phase auch als getrennte Tröpfchen suspendiert ist und die Phasen des wasserquellbaren Tons und der Wasser-Polymer-Lösung durch eine dazwischenliegende intakte Öl-Netzmittel-Phase getrennt sind, wobei das Tonmaterial in einer genügenden Menge vorhanden ist, daß es eine Paste mit einer Scherfestigkeit von wenigstens 907 kg/9,3 $m^2$ (2000 lb/100 $ft^2$) bildet, wenn die Öl-Netzmittel-Phase durch Anwendung einer genügend hohen Scherkraft zerrissen wird.

2. Stoffzusammensetzung nach Anspruch 1, worin das in Wasser quellbare Tonmaterial, das eine Korngröße im Bereich von 1,68 mm bis 0.25 mm hat, ausgewählt ist aus der Gruppe körniger Montmorillonit-Ton und körniger Attapulgit-Ton.

3. Stoffzusammensetzung nach Anspruch 1, worin das Öl Mineralöl, $C_6$- bis $C_{1000}$- Paraffinöl, Motoröl und/oder substituiertes Paraffinöl, worin die Substituenten ausgewählt sind aus der Gruppe Halogenatome und Amino-, Sulfat-, Nitrat-, Carboxyl- und Hydroxyl-Gruppen, ist.

4. Stoffzusammensetzung nach Anspruch 2, worin das Öl ein flüssiges $C_6$- bis $C_{200}$-Paraffinöl ist.

5. Stoffzusammensetzung nach Anspruch 1, worin das wasserlösliche Polymer Polyacrylamid, Polymethacrylamid, Polystyrol-Sulfonat, Polyvinyltoluol-Sulfonat, Polyethylenoxid oder Polyvinylalkohol ist.

6. Stoffzusammensetzung nach Anspruch 4, worin das wasserlösliche Polymer Polyacrylamid ist.

7. Stoffzusammensetzung nach Anspruch 6, worin das Polyacrylamid bis zu einem Grad von 0 bis 50% hydrolisiert ist.

8. Stoffzusammensetzung nach Anspruch 1, 2, 3, 4, 5, 6 oder 7, welche 100 Gewichtsteile (Gew.-T) körniges Tonmaterial, 25 bis 400 Gew.-T. Wasser, 0,1 bis 6,7 Gew.-T. wasserlösliches Polymer, 25 bis 130 Gew.-T. Öl und 5,5 bis 29 Gew.-T. Netzmittel enthält.

9. Stoffzusammensetzung nach Anspruch 8, worin das Netzmittel das Produkt ist, welches erhalten wurde durch die Umsetzung des Polyamins

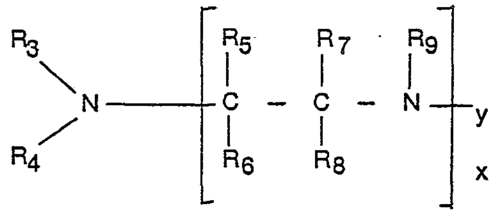

worin $R_3$, $R_4$, $R_5$, $R_6$, $R_7$, $R_8$ und $R_9$ y ausgewählt sind aus der Gruppe Wasserstoff, $C_1$- bis $C_{20}$—Alkyl-, $C_6$- bis $C_{20}$—Aryl-, $C_7$- bis $C_{20}$—Alkarylreste und substituierte Derivate derselben und x eine Zahl von 1 bis 100 ist, mit Polyalkylensuccinanhydriden, wobei die Reaktion an dem mit $R_3$ und $R_4$ substituierten Stickstoff erfolgt.

10. Stoffzusammensetzung nach Anspruch 9, worin das Polyalkylensuccinanhydrid ausgewählt ist aus der Gruppe Polyisobutylensuccinanhydrid, Polypropylensuccinanhydrid und Polybutylensuccinanhydrid.

11. Stoffzusammensetzung nach Anspruch 9, worin das Netzmittel wiedergegeben ist durch die allgemeine Formel:

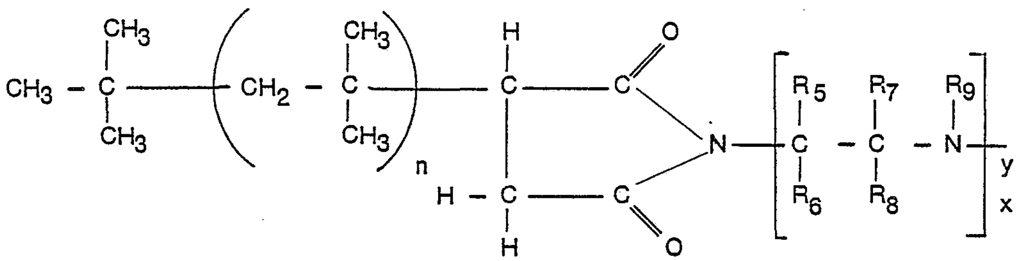

(A)

worin n im Bereich von 10 bis 60, vorzugsweise von 10 bis 30, besonders bevorzugt von 15 bis 17 liegt, x im Bereich von 1 bis 100, vorzugsweise 3 bis 10 liegt, $R_5$, $R_6$, $R_7$, $R_8$, $R_9$ Wasserstoff, $C_1$- bis $C_{20}$—Alkyl-, $C_6$- bis $C_{20}$—Aryl-, $C_7$- bis $C_{20}$—Alkarylreste und substituierte Derivate derselben sind und y ausgewählt ist aus der Gruppe wasserstoff-und sauerstoffhaltige Hydrocarbylreste mit bis zu 10 Kohlenstoffatomen.

12. Stoffzusammensetzung nach Anspruch 11, worin das Netzmittel wiedergegeben ist durch die Formel:

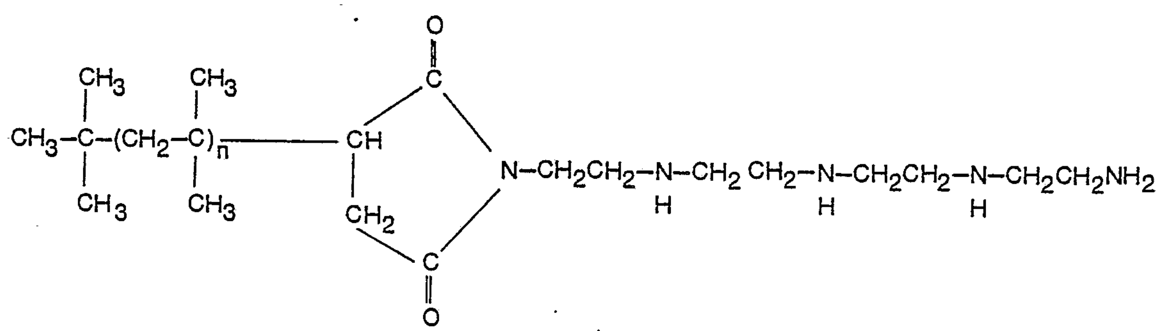

oder

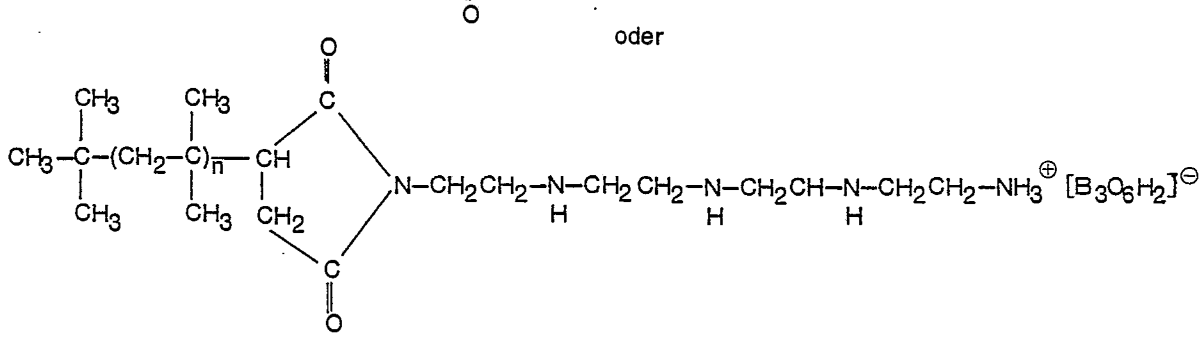

13. Stoffzusammensetzung nach Anspruch 8, worin das körnige Tonmaterial eine Korngröße im Bereich von 1,68 mm bis 0,354 mm hat.

14. Stoffzusammensetzung nach Anspruch 8, worin das körnige Tonmaterial eine Korngröße im Bereich von 0,841 mm bis 0,354 mm hat.

15. Verfahren zum Behandeln eines eine unterirdische Formation durchdringenden Bohrschachtes zum Abblocken von unerwünschten Fließwegen, wobei in den Bohrschacht eine durch Scherkraft

verdickende Stoffzusammensetzung, die beim Pumpen stabil ist, eingeführt wird, welche ein durch Wasser quellbares körniges Tonmaterial mit einer Korngröße im Bereich von 1,68 mm bis 0,25 mm, das beim Mischen mit einer Wasser-wasserlösliches Polymer-Lösung rasch eine hochfeste Paste bildet, eine Öl-Netzmittel-Phase und eine Wasser-wasserlösliches Polymer-Phase enthält, worin das wasserquellbare körnige Tonmaterial in der Öl-Netzmittel-Phase in Form getrennter Teilchen suspendiert ist und die Wasser-wasserlösliches Polymer-Phase in der Öl-Netzmittel-Phase ebenfalls in Form getrennter Tröpfchen suspendiert ist und worin die Phasen des wasserquellbaren Tonmaterials und die Wasser-Polymer-Phase durch eine dazwischenliegende intakte Öl-Netzmittel-Phase getrennt sind und das Tonmaterial in einer genügenden Menge vorhanden ist, um eine Paste mit einer Scherfestigkeit von wenigstens 908 kg/9,3 $m^2$ (200 lb/100 $ft^2$) zu bilden, wenn die Öl—Netzmittel-Phase durch Einwirkung einer genügend hohen Scherkraft zerrissen wird.

16. Verfahren nach Anspruch 15, worin das Mischen mit hoher Scherkraft darin besteht, das durch Scherkraft verdickende Fluid durch die Öffnungen eines Drillkopfes oder einer Düse im Bohrschacht zu leiten, wodurch die kontinuierliche Öl-Netzmittel-Phase zerrissen wird.

17. Verfahren nach Anspruch 15, worin die durch Scherkraft verdickende Stoffzusammensetzung 100 Gewichtsteile (Gew.-T.) körniges Tonmaterial mit einer Korngröße im Bereich von 1,68 mm bis 0,250 mm, 25 bis 400 Gew.-T. Wasser, 0,1 bis 6,7 Gew.-T. wasserlösliches Polymer, 25 bis 130 Gew.-T. Öl und 5,5 bis 29 Gew.-T. Netzmittel enthält.

18. Verfahren nach Anspruch 17, worin das körnige Tonmaterial Montmorillonit-Ton oder Attapulgit-Ton, das Öl Mineralöl, $C_6$- bis $C_{1000}$—Paraffinöl, Motoröl oder substituiertes Paraffinöl, worin die Substituenten ausgewählt sind aus der Gruppe Halogenatome und Amino-, Sulfat-, Nitrat-, Carboxyl- und Hydroxylgruppen und das Netzmittel das Produkt ist, welches gebildet ist durch die Reaktion des Polyamins

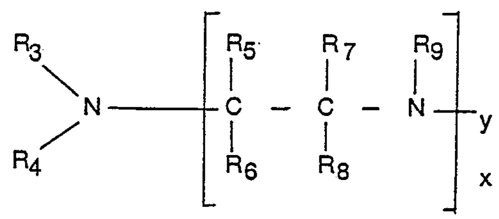

worin $R_3$ bis $R_9$ und y ausgewählt sind aus der Gruppe Wasserstoff, $C_1$- bis $C_{20}$—Alkyl-, $C_6$- bis $C_{20}$—Aryl-, $C_7$— bis $C_{20}$—Alkarylreste und substituierte Derivate derselben und x eine Zahl von 1 bis 100 ist, mit Polyalkylensuccinanhydriden, wobei die Reaktion am mit $R_3$, $R_4$ substituierten Stickstoff abläuft und das wasserlösliche Polymer Polyacrylamid, Polymethacrylamid, Polystyrolsulfonat, Polyvinyltoluolsulfonat, Polyethylenoxid oder Polyvinylalkohol ist.

19. Verfahren nach Anspruch 18, worin das wasserlösliche Polymer Polyacrylamid ist.

20. Verfahren nach Anspruch 17, 18 oder 19, worin das Netzmittel wiedergegeben ist durch die allgemeine Formel

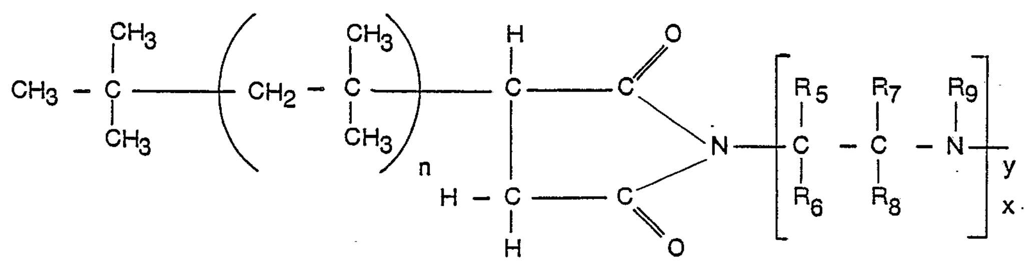

(A)

worin n eine Zahl von 10 bis 60, vorzugsweise von 10 bis 30, besonders bevorzugt 15 bis 17 ist, x eine Zahl von 1 bis 100, vorzugsweise 3 bis 10 ist, $R_5$, $R_6$, $R_7$, $R_8$, $R_9$ Wasserstoff, $C_1$- bis $C_{20}$—Alkyl-, $C_6$- bis $C_{20}$—Aryl- oder $C_7$- bis $C_{20}$—Alkarylreste oder deren substituierte Derivate sind und y ausgewählt ist aus der Gruppe wasserstoff- und sauerstoffhaltige Hydrocarbylreste mit bis zu 10 Kohlenstoffatomen.

21. Verfahren nach Anspruch 20, worin das Netzmittel die folgende Formel hat:

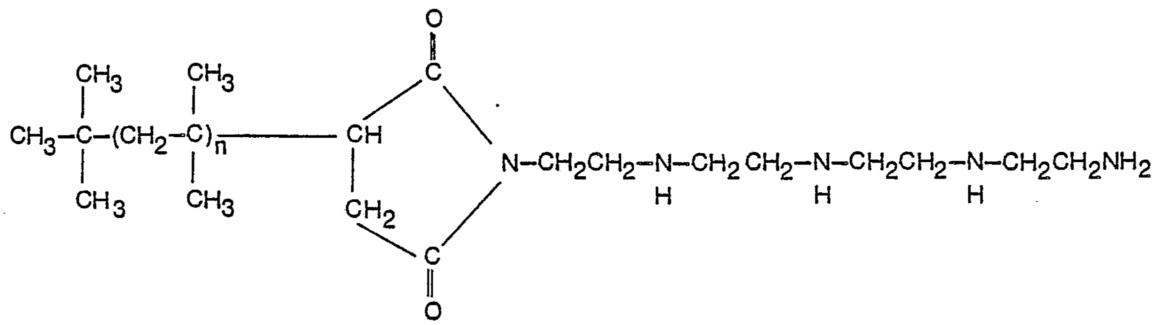

oder

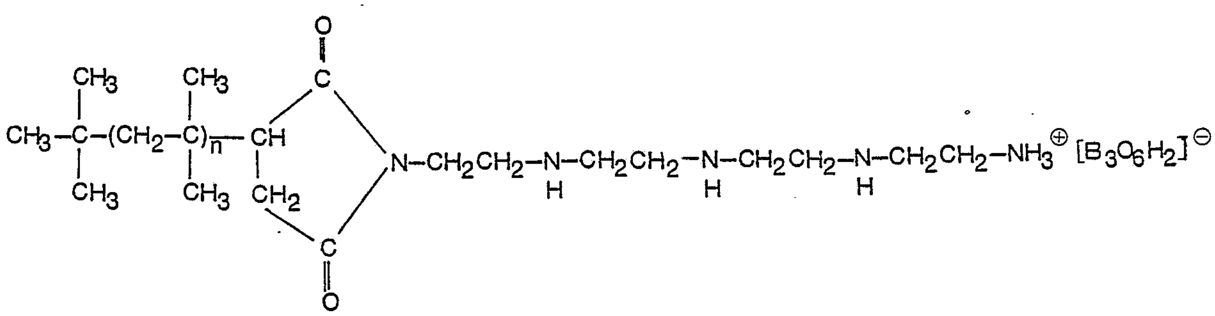

22. Verfahren nach Anspruch 17, 18 oder 19, worin das körnige Tonmaterial eine Korngröße im Bereich von 1,68 mm bis 0.354 mm hat.

23. Verfahren nach Anspruch 20, worin das körnige Tonmaterial eine Korngröße im Bereich von 1,68 mm bis 0.354 mm hat.

24. Verfahren nach Anspruch 21, worin das körnige Tonmaterial eine Korngröße im Bereich von 1,68 mm bis 0,354 mm hat.

25. Verfahren nach Anspruch 17, 18 oder 19, worin das körnige Tonmaterial eine Korngröße im Bereich von 0,841 bis 0,354 mm hat.

26. Verfahren nach Anspruch 20, worin das körnige Tonmaterial eine Korngröße im Bereich von 0,841 bis 0,354 mm hat.

27. Verfahren nach Anspruch 21, worin das körnige Tonmaterial eine Korngröße im Bereich von 0,841 bis 0,354 mm hat.

**Revendications**

1. Composition épaississant par cisaillement comprenant une argile granulaire gonflant sous l'action de l'eau, en particules de diamètre compris dans l'intervalle de 1,68 mm à 0,250 mm, capable de former rapidement une pâte à grande résistance en mélange avec une solution aqueuse de polymère hydrosoluble, une phase huile-surfactant et une phase eau/polymère hydrosoluble, composition dans laquelle l'argile granulaire qui peut gonfler sous l'action de l'eau est un suspension dans la phase huile-surfactant en particles discrètes et la phase eau-polymère hydrosoluble est également en suspension dans la phase huile-surfactant en gouttelettes discrètes et l'argile gonflant sous l'action de l'eau et la phase eau-polymère sont séparées par une phase huile-surfactant intermédiaire intacte, l'argile étant présente en une quantité suffisante pour former une pâte ayant une résistance au cisaillement d'au moins 907 kg/9,3 $m^2$ (2000 lb/100 $ft^2$) lorsque la phase huile-surfactant est rompue sous l'effet d'un cisaillement suffisant.

2. Composition suivant la revendication 1, dans laquelle l'argile granulaire apte à gonfler sous l'action de l'eau, ayant des diamètres de particules de 1,68 mm à 0,250 mm, est choisie dans le groupe comprenant une argile granulaire du type montmorillonite et une argile granulaire du type attapulgite.

3. Composition suivant la revendication 1, dans laquelle l'huile comprend une huile minérale, une huile paraffinique en $C_6$ à $C_{1000}$, une huile moteur, une huile paraffinique substituée dont les substituants sont choisis dans le groupe comprenant des atomes d'halogène et les groupes amino, sulfate, nitrate, carboxyle et hydroxyle.

4. Composition suivant la revendication 2, dans laquelle l'huile est une huile paraffinique liquide en $C_6$ à $C_{200}$.

5. Composition suivant la revendication 1, dans laquelle le polymère hydrosoluble est un polyacrylamide, un polyméthacrylamide, un polystyrènesulfonate, un polyvinyltoluènesulfonate, un polyéthylèneoxyde ou un alcool polyvinylique.

6. Composition suivant la revendication 4, dans laquelle le polymère hydrosoluble est un polyacrylamide.

7. Composition suivant la revendication 6, dans laquelle le polyacrylamide est hydrolysé à un degré allant de 0 à 50%.

8. Composition suivant les revendications 1, 2, 3, 4, 5, 6 ou 7, comprenant 100 parties en poids (pep) d'argile granulaire, 25 à 400 pep d'eau, 0,1 à 6,7 pep de polymère hydrosoluble, 25 à 130 pep d'huile et 5,5 à 29 pep de surfactant.

9. Composition suivant la revendication 8, dans laquelle le surfactant est le produit obtenu par réaction de la polyamine:

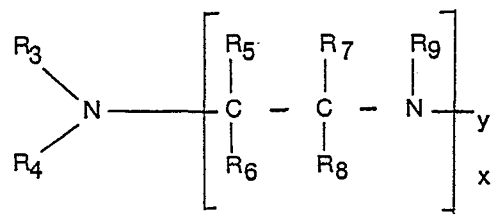

dans laquelle $R_3$, $R_4$, $R_5$, $R_6$, $R_7$, $R_8$, $R_9$ et y sont choisis dans le groupe comprenant l'hydrogène, des radicaux alkyle en $C_1$ à C20, aryle en $C_6$ à $C_{20}$, alkaryle en $C_7$ à $C_{20}$, et leurs dérivés substitués et x est un nombre entier de 1 à 100, avec des anhydrides polyalkylènesucciniques, la réaction ayant lieu au niveau de l'atome d'azote portant les substituants $R_3$, $R_4$.

10. Composition suivant la revendication 9, dans laquelle l'anhydride polyalkylènesuccinique est choisi dans le groupe comprenant un anhydride polyisobutylènesuccinique, un anhydride polypropylène-succinique et un anhydride polybutylènesuccinique.

11. Composition suivant la revendication 9, dans laquelle le surfactant est représenté par la formule générale:

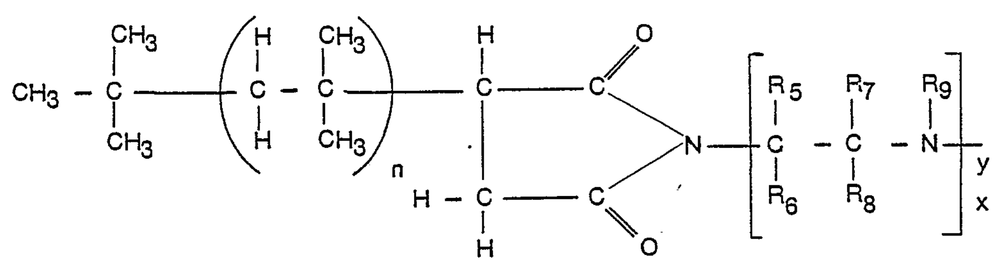

(A)

dans laquelle n varie de 10 à 60, mieux encore de 10 à 30, notamment de 15 à 17; x varie de 1 à 100, notamment de 3 à 10; $R_5$, $R_6$, $R_7$, $R_8$, $R_9$ représentent un atome d'hydrogène, un radical alkyle en $C_1$ à $C_{20}$, aryle en $C_6$ à $C_{20}$, alkaryle en $C_7$ à $C_{20}$ et un dérivé substitué d'un tel radical et y est choisi dans le groupe comprenant l'hydrogène et des radicaux hydrocarbyle contenant de l'oxygène et ayant jusqu'à 10 atomes de carbone.

12. Composition suivant la revendication 11, dans laquelle le surfactant est représenté par la formule:

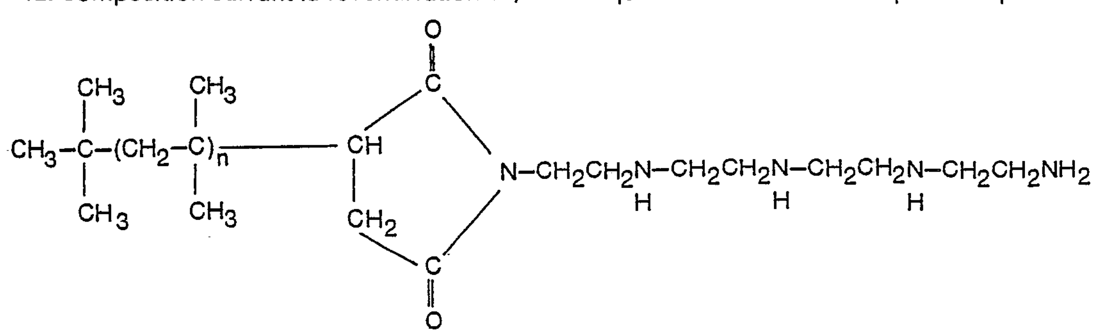

ou

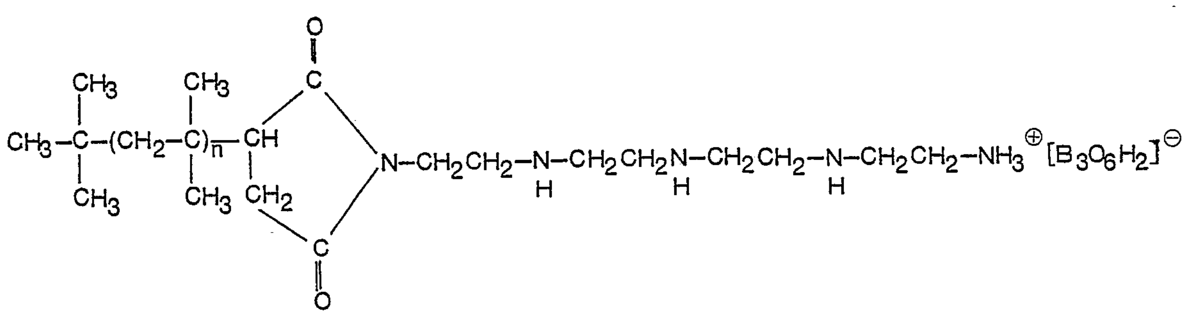

13. Composition suivant la revendication 8, dans laquelle l'argile granulaire a une grosseur de grain comprise dans l'intervalle de 1,68 mm à 0,354 mm.

14. Composition suivant la revendication 8, dans laquelle l'argile granulaire a une grosseur de grain comprise dans l'intervalle de 0,841 à 0,354 mm.

15. Procédé de traitement d'un puits traversant une formation souterraine pour obturer des voies d'écoulement non désirées, consistant à introduire dans le puits une composition épaississant par cisaillement, stable au pompage, comprenant une argile granulaire gonflant sous l'action de l'eau, en particules de diamètre compris dans l'intervalle de 1,68 mm à 0,250 mm, capable de former rapidement une pâte à grande résistance en mélange avec une solution aqueuse de polymère hydrosoluble, une phase huile-surfactant et une phase eau/polymère hydrosoluble, composition dans laquelle l'argile granulaire qui peut gonfler sous l'action de l'eau est un suspension dans la phase huile-surfactant en particules discrètes et la phase eau-polymère hydrolsoluble est également en suspension dans la phase huile-surfactant en gouttelettes discrètes et l'argile gonflant sous l'action de l'eau et la phase eau-polymère sont séparées par une phase huile-surfactant intermédaire intacte, l'argile étant présente en une quantité suffisant pour former une pâte ayant une résistance au cisaillement d'au moins 907 kg/9,3 $m^2$ (2000 lb/100 $ft^2$) lorque la phase huile-surfactant est rompue sous l'effet d'un cisaillement suffisant.

16. Procédé suivant la revendication 15, dans lequel le mélange sous fort cisaillement consiste à faire passer le fluide épaississant par cisaillement à travers les orifices d'un outil de forage ou d'une buse dans le puits, de manière à rompre la phase huile-surfactant continue.

17. Procédé suivant la revendication 15, dans lequel la composition épaississant par cisaillement comprend 100 parties en poids (pep) d'argile granulaire, en particles d'un diamètre de 1,68 mm à 0,250 mm, 25 à 400 pep d'eau, 0,1 à 6,7 pep de polymère hydrosoluble, 25 à 130 pep d'huile et 5,5 à 29 pep de surfactant.

18. Procédé suivant la revendication 17, dans lequel l'argile granulaire est une argile du type montmorillonite ou une argile du type attapulgite, l'huile est une huile minérale, une huile paraffinique en $C_6$ à $C_{1000}$, une huile moteur, et une huile paraffinique substituée dont les substituants sont choisis dans le groupe comprenant des atomes d'halogènes et des groupes amino, sulfate, nitrate, carboxyle et hydroxyle et le surfactant est le produit obtenu par réaction de la polyamine

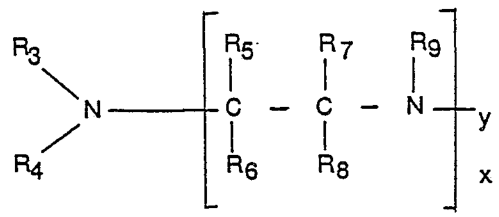

dans la formule de laquelle $R_3$—$R_9$ et y sont choisis dans le groupe comprenant l'hydrogène, des radicaux alkyle en $C_1$ à $C_{20}$, aryle en $C_6$ à $C_{20}$, alkaryle en $C_7$ à $C_{20}$ et leurs dérivés substitués et x est un nombre entier de 1 à 100, avec des anhydrides polyalkylènesucciniques, la réaction ayant lieu au niveau de l'atome d'azote portant les substituants, $R_3$, $R_4$ et le polymère hydrosoluble est un polyacrylamide, polyméthacrylamide, polystyrènesulfonate, polyvinyltoluènesulfonate, polyéthylèneoxyde ou alcool polyvinylique.

19. Procédé suivant la revendication 18, dans lequel le polymère hydrosoluble est un polyacrylamide.

20. Procédé suivant les revendications 17, 18, ou 19, dans lequel le surfactant est représenté par la formule générale

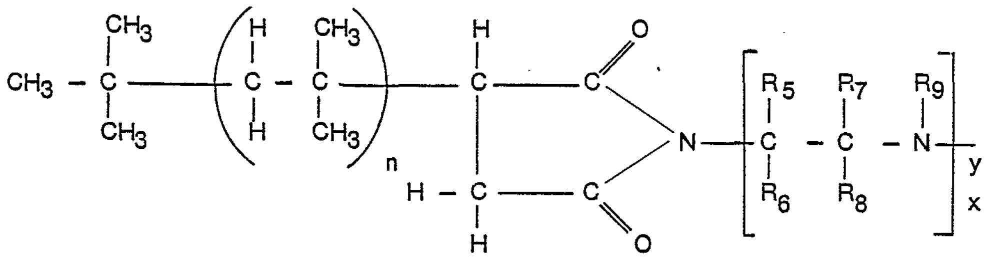 (A)

dans laquelle n varie de 10 à 60, mieux encore de 10 à 30, notamment de 15 à 17; x varie de 1 à 100, de préférence de 3 à 10; $R_5$, $R_6$, $R_7$, $R_8$, $R_9$ sont des atomes d'hydrogène, des radicaux alkyle en $C_1$ à $C_{20}$, aryle en $C_6$ à $C_{20}$, ou alkaryle en $C_7$ à $C_{20}$ ou un dérivé substitué de ces radicaux et y est choisi dans le groupe comprenant l'hydrogène et des radicaux hydrocarbyle contenant de l'oxygène et ayant jusqu'à 10 atomes de carbone.

21. Procédé suivant la revendication 20, dans lequel le surfactant répond à la formule

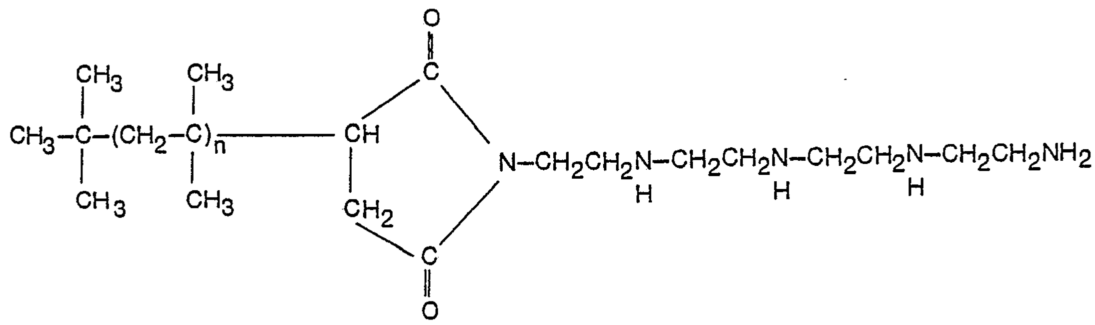

ou

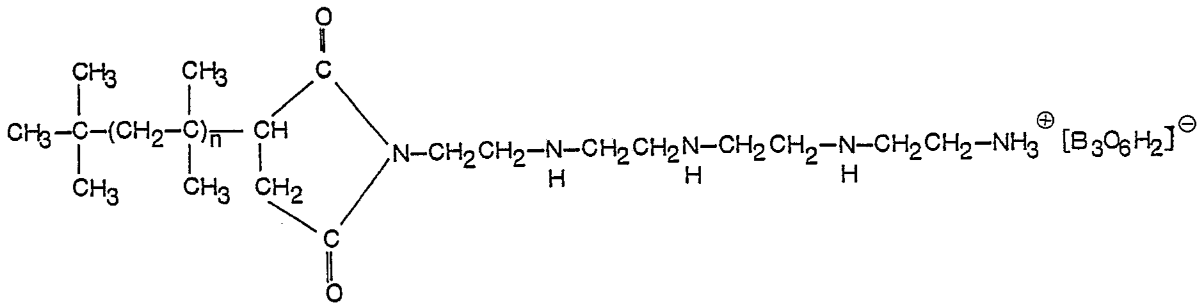

22. Procédé suivant les revendications 17, 18 ou 19, dans lequel l'argile granulaire a une grosseur de grain choisie dans l'intervalle de 1,68 mm à 0,354 mm.

23. Procédé suivant la revendication 20, dans lequel l'argile granulaire a une grosseur de grain comprise dans l'intervalle de 1,68 mm à 0,354 mm.

24. Procédé suivant la revendication 21, dans lequel l'argile granulaire a une grosseur de grain comprise dans l'intervalle de 1,68 mm à 0,354 mm.

25. Procédé suivant les revendications 17, 18 ou 19, dans lequel l'argile granulaire a une grosseur de grain comprise dans l'intervalle de 0,841 à 0,354 mm.

26. Procédé suivant la revendication 20, dans lequel l'argile granulaire a une grosseur de grain comprise dans l'intervalle de 0,841 à 0,354 mm.

27. Procédé suivant la revendication 21, dans lequel l'argile granulaire a une grosseur de grain comprise dans l'intervalle de 0,841 à 0,354 mm.

FIG. I

PASTE STRENGTH OF GRANULAR BENTONITE L.M. SHEAR THICKENING FLUID AS A FUNCTION OF LOW SHEAR MIXING TIME BEFORE AND AFTER PASSAGE THROUGH A HIGH SHEAR NOZZLE (1)

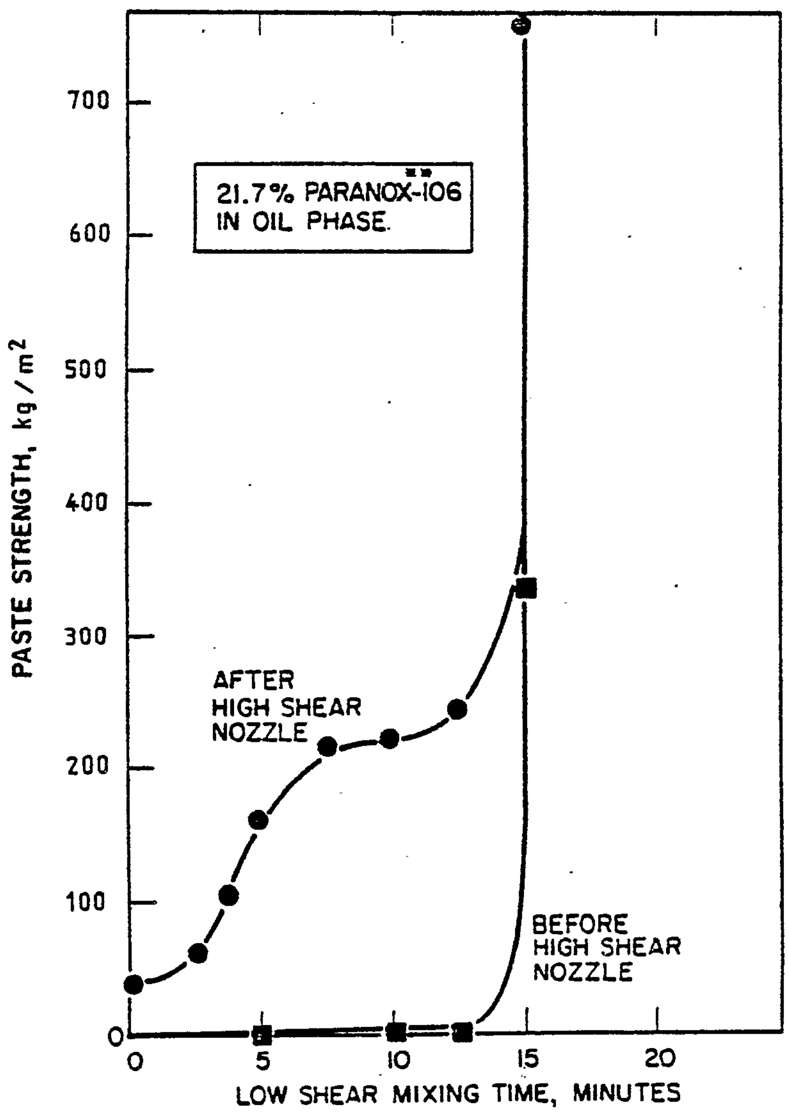


(1) BASIC FORMULATION:

37.5 g OIL (21.7% PARANOX-106** IN S100N)

75.0 g KWK VOLCLAY

125.0 g 1% P-250

** PARANOX IS A REGISTERED TRADEMARK

FIG. 2

PASTE STRENGTH OF GRANULAR BENTONITE L.M. SHEAR THICKENING FLUID AS A FUNCTION OF LOW SHEAR MIXING TIME BEFORE AND AFTER PASSAGE THROUGH A HIGH SHEAR NOZZLE (1)

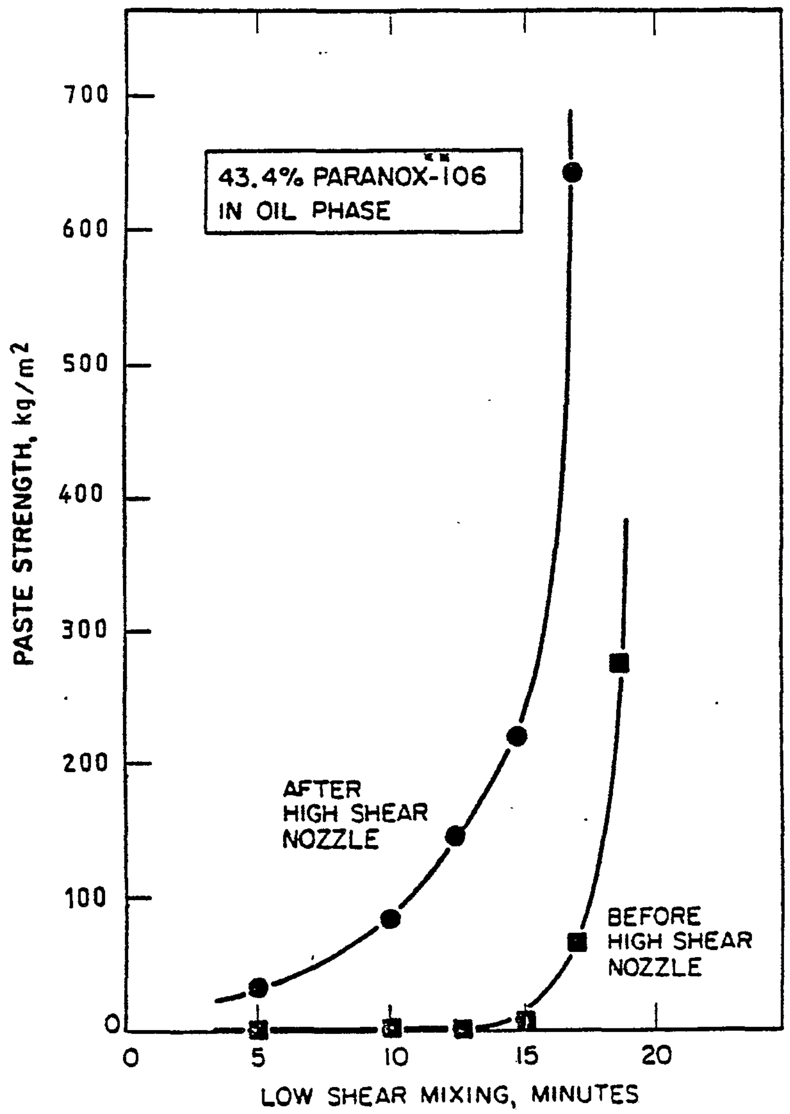


(1) BASIC FORMULATION:
37.5 g OIL (43.4% PARANOX**-106 IN S100N)
75.0 g KWK VOLCLAY
125.0 g 1% P-250
** PARANOX IS A REGISTERED TRADEMARK

FIG. 3

LOW SHEAR THICKENING TIMES AND PASTE STRENGTHS AFTER HIGH SHEAR OF GRANULAR BENTONITE L.M. SHEAR THICKENING FLUID AS A FUNCTION OF $H_2O$/CLAY WEIGHT RATIO*

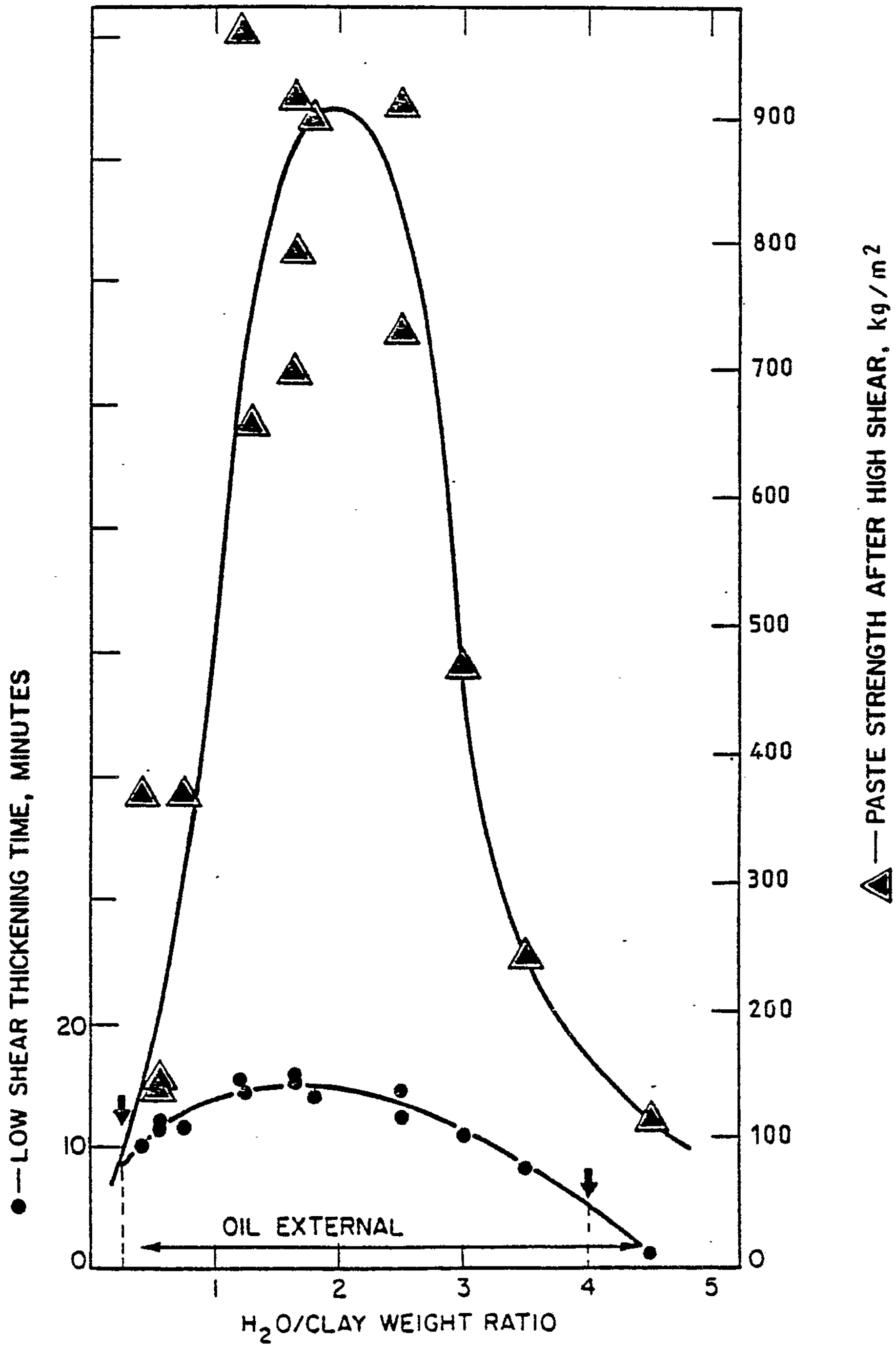


*FIXED SURFACTANT/CLAY (0.11), OIL/CLAY (0.39), AND POLYMER/CLAY (0.0167) WEIGHT RATIOS

FIG. 4

LOW SHEAR THICKENING TIMES AND PASTE STRENGTHS AFTER HIGH SHEAR OF GRANULAR BENTONITE L.M. SHEAR THICKENING FLUID AS A FUNCTION OF (OIL + SURF)/CLAY WEIGHT RATIO*

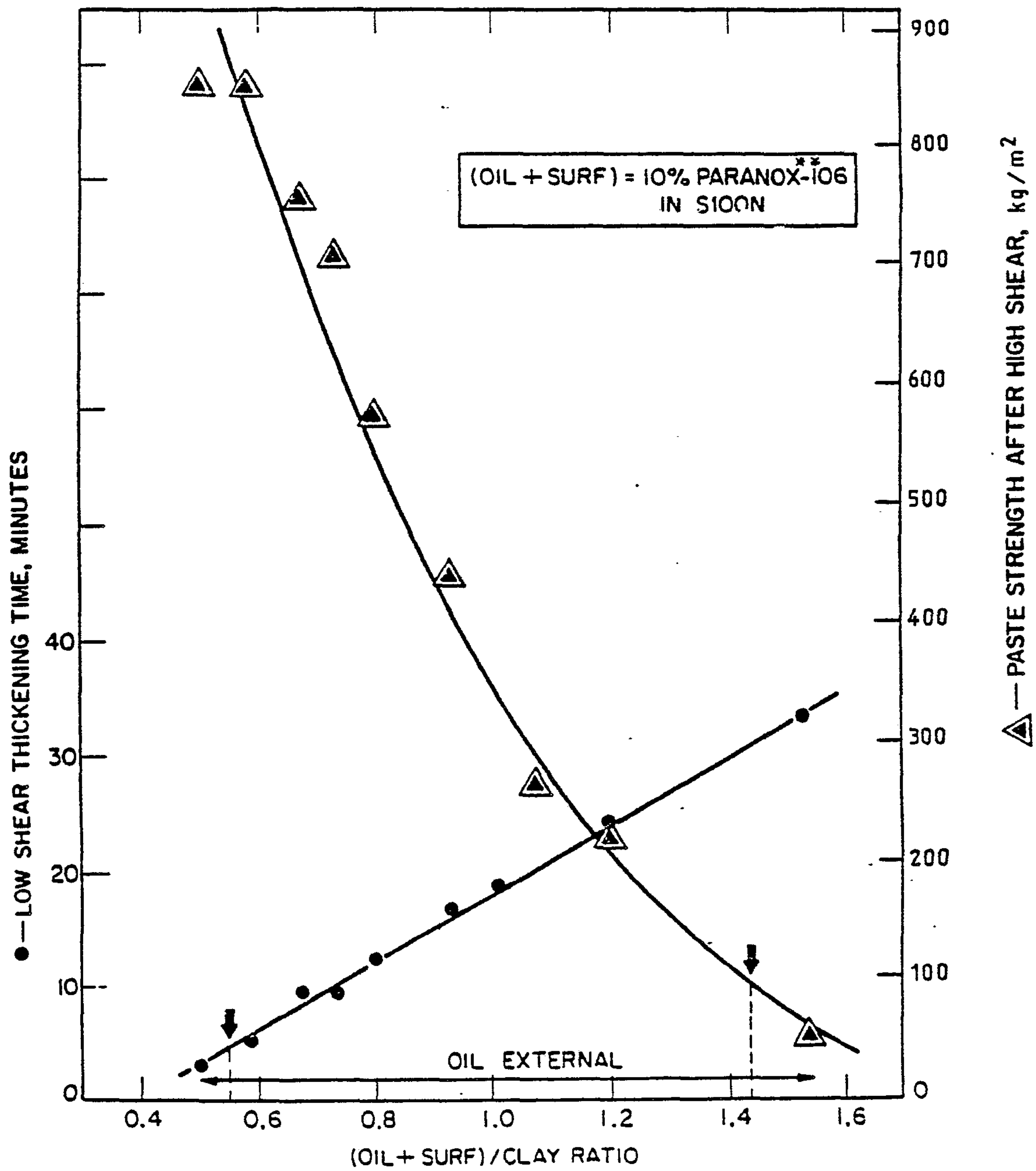


*FIXED $H_2O$/CLAY (1.65) AND POLYMER/CLAY (0.0167) WEIGHT RATIOS; (OIL + SURF) = 10% PARANOX**-106 IN S100N

** PARANOX IS A REGISTERED TRADEMARK

# FIG. 5

LOW SHEAR THICKENING TIMES AND PASTE STRENGTHS AFTER HIGH SHEAR OF GRANULAR BENTONITE L.M. SHEAR THICKENING FLUID AS A FUNCTION OF (OIL + SURF)/CLAY WEIGHT RATIO*

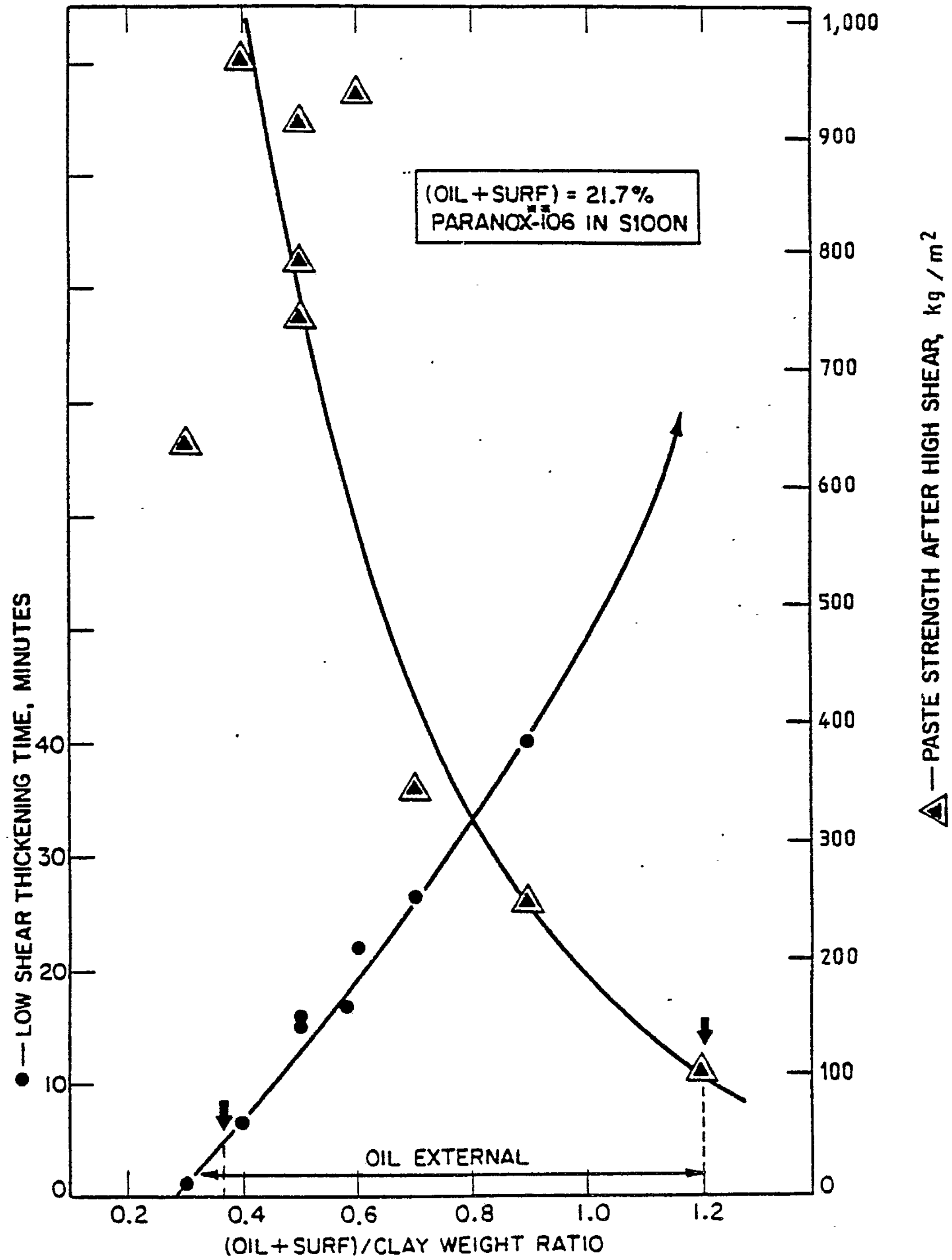


*FIXED $H_2O$/CLAY (1.65) AND POLYMER/CLAY (0.0167) WEIGHT RATIOS; (OIL + SURF) = 21.7% PARANOX**-106 IN S100N

** PARANOX IS A REGISTERED TRADEMARK

FIG. 6

LOW SHEAR THICKENING TIMES AND PASTE STRENGTHS AFTER HIGH SHEAR
OF GRANULAR BENTONITE L.M. SHEAR THICKENING FLUID
AS A FUNCTION OF (OIL+SURF)/CLAY WEIGHT RATIO*

KING RANCH, TEXAS

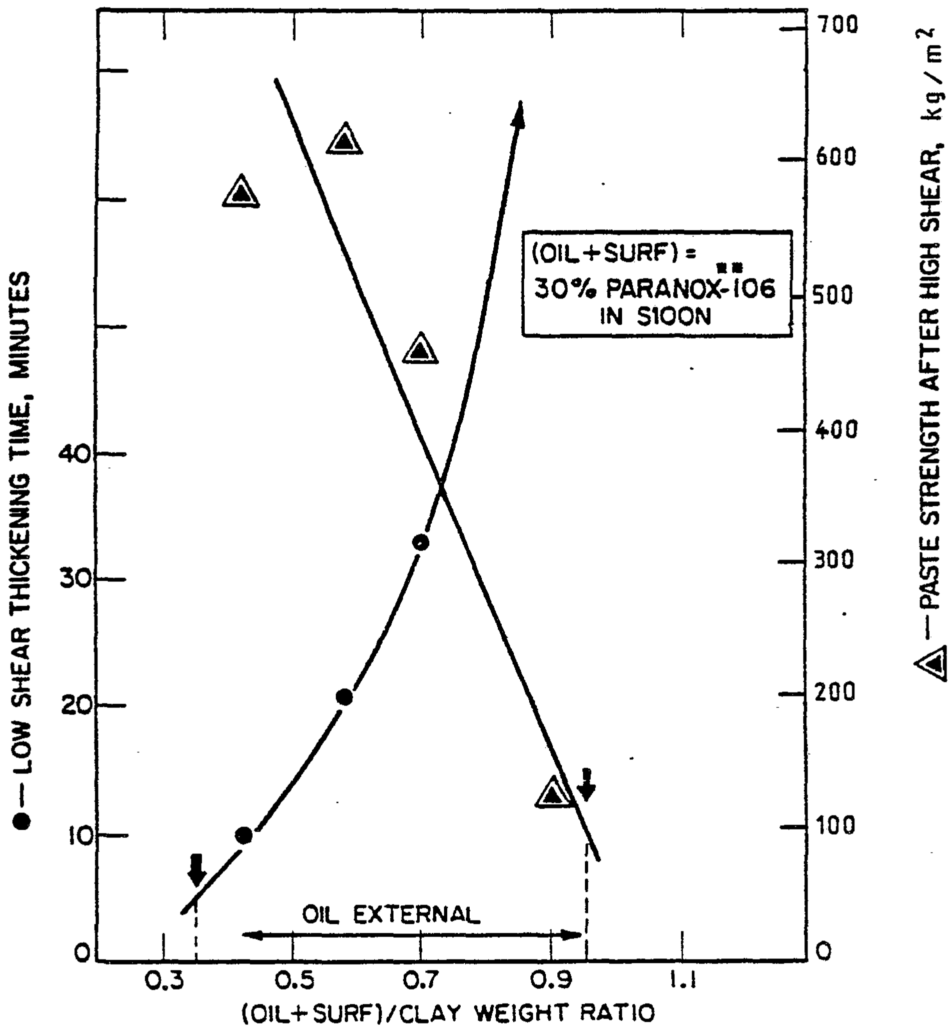


*FIXED WATER/CLAY (1.65) AND POLYMER/CLAY (0.0167) WEIGHT RATIOS; (OIL+SURF) = 30% PARANOX-106**("OCTOBER SURF") IN S100N; TRUCKED WATER CONTAINING A SUBSTANTIAL AMOUNT OF RUST

** PARANOX IS A REGISTERED TRADEMARK

FIG. 7

LOW SHEAR THICKENING TIMES AND PASTE STRENGTHS AFTER HIGH SHEAR
OF GRANULAR BENTONITE L.M. SHEAR THICKENING FLUID
AS A FUNCTION OF AQUEOUS PHASE WEIGHT PERCENT P-250*

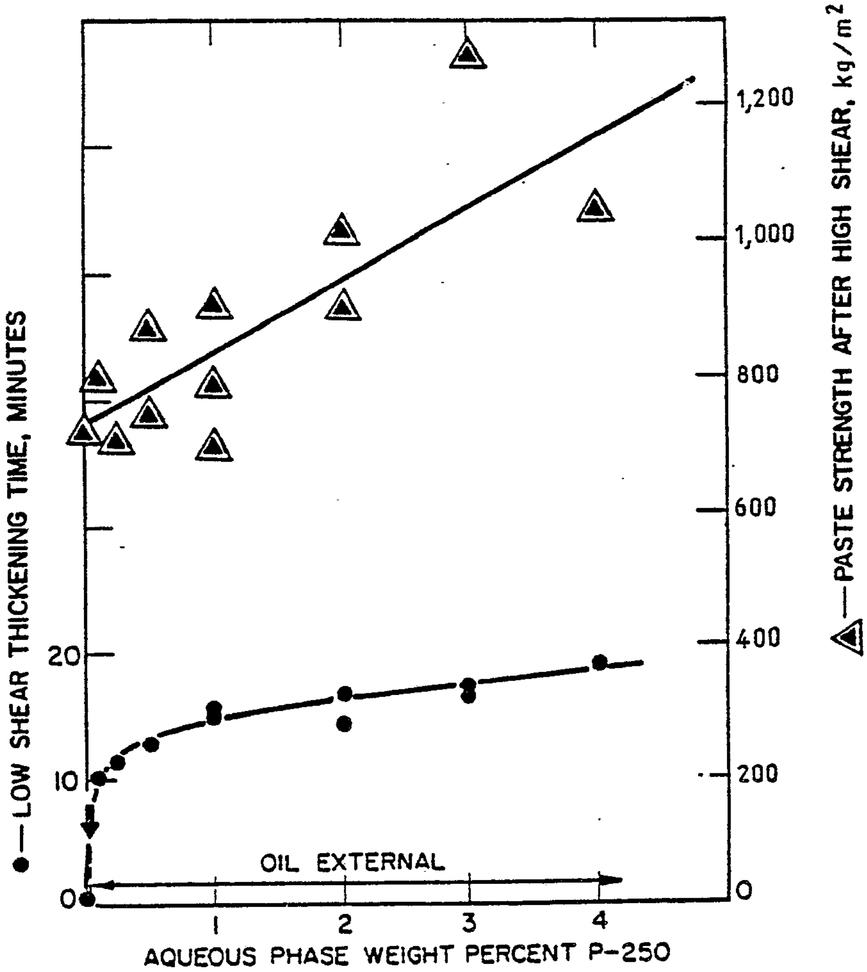


*FIXED $H_2O$/CLAY (1.65), SURFACTANT/CLAY (0.11), AND OIL/CLAY (0.39) WEIGHT RATIOS

FIG. 8

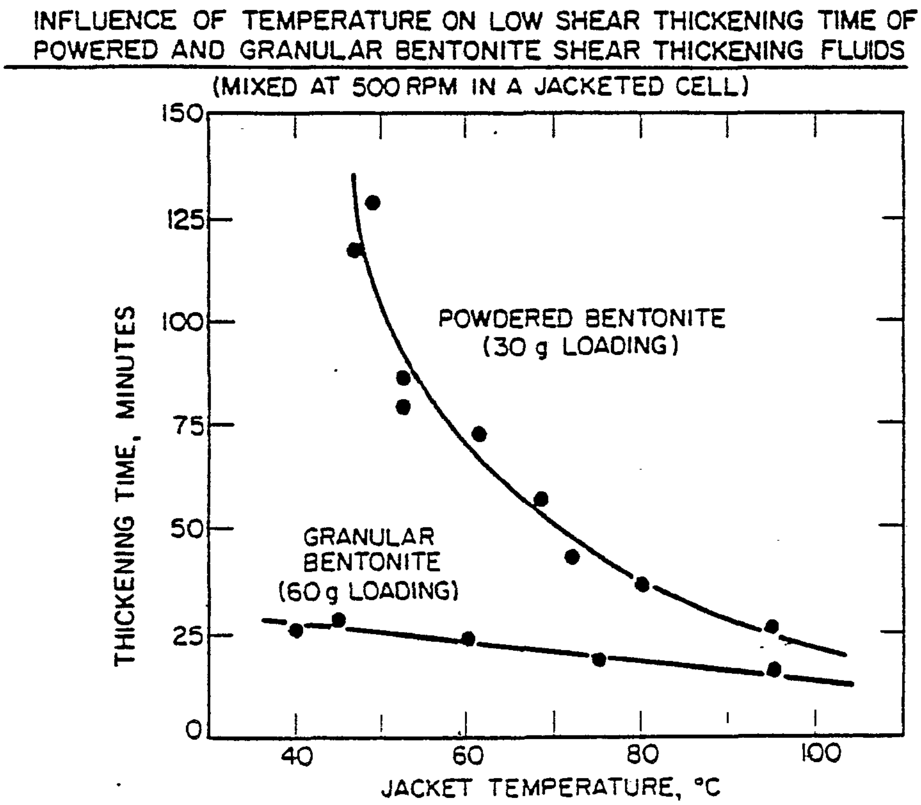
INFLUENCE OF TEMPERATURE ON LOW SHEAR THICKENING TIME OF POWERED AND GRANULAR BENTONITE SHEAR THICKENING FLUIDS
(MIXED AT 500 RPM IN A JACKETED CELL)
THICKENING TIME, MINUTES
150
125
100
75
50
25
0
POWDERED BENTONITE
(30 g LOADING)
GRANULAR
BENTONITE
(60 g LOADING)
40
60
80
100
JACKET TEMPERATURE, °C

FIG. 9

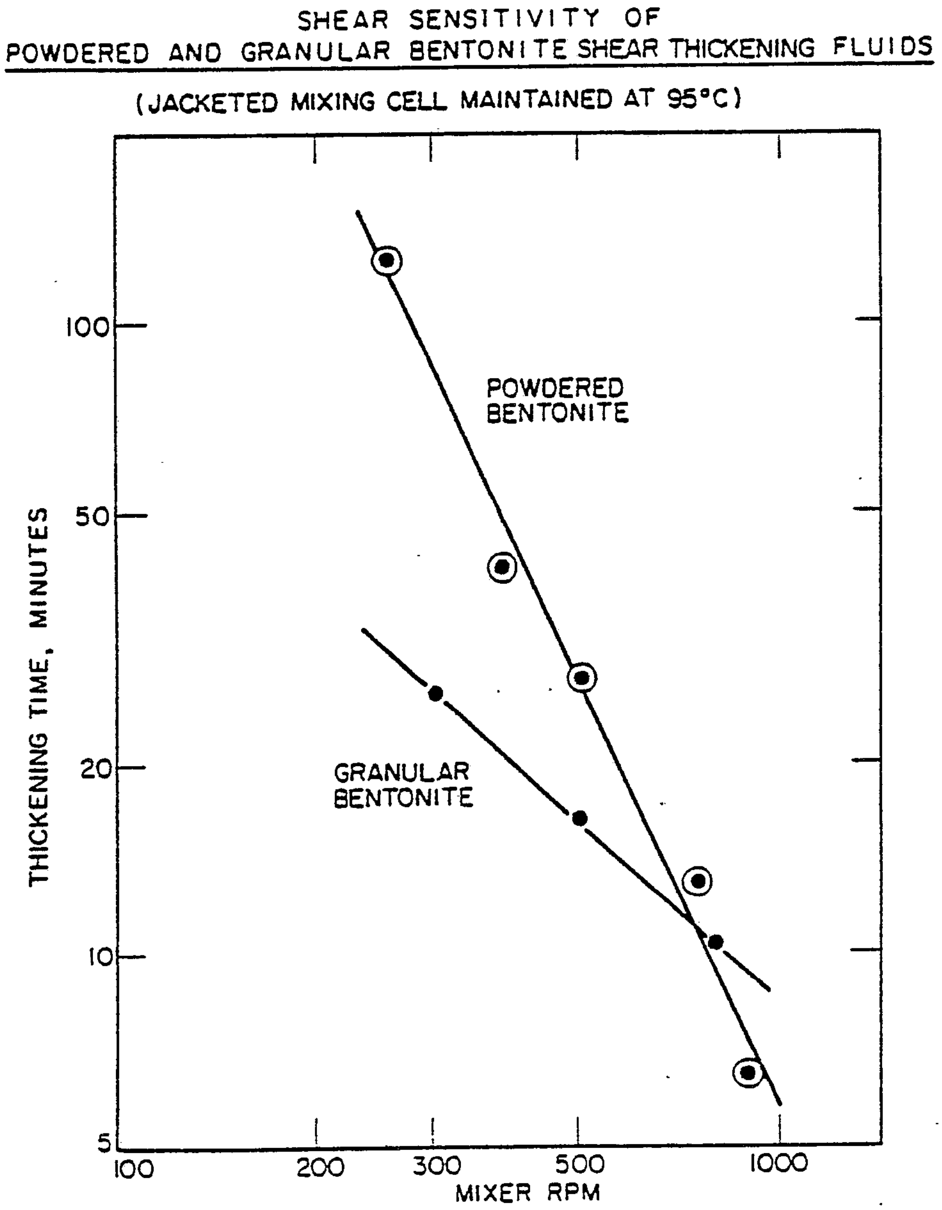
SHEAR SENSITIVITY OF
POWDERED AND GRANULAR BENTONITE SHEAR THICKENING FLUIDS
(JACKETED MIXING CELL MAINTAINED AT 95°C)
THICKENING TIME, MINUTES
100
50
20
10
5
POWDERED BENTONITE
GRANULAR BENTONITE
100
200
300
500
1000
MIXER RPM

FIG. 10

INFLUENCE OF $H_2O$/CLAY RATIO ON THICKENING TIME OF POWDERED AND GRANULAR BENTONITE SHEAR THICKENING FLUIDS

(JACKETED CELL MAINTAINED AT 500 RPM, 95°C)